(19) Europäisches Patentamt
European Patent Office
Office européen des brevets

(11) EP 3 726 109 A1

(12) EUROPEAN PATENT APPLICATION
published in accordance with Art. 153(4) EPC

(43) Date of publication:
21.10.2020 Bulletin 2020/43

(51) Int Cl.:
F16K 15/14 (2006.01)      B41J 2/175 (2006.01)
F04B 43/02 (2006.01)      F04B 53/10 (2006.01)

(21) Application number: 18888684.0

(22) Date of filing: 07.12.2018

(86) International application number:
PCT/JP2018/045049

(87) International publication number:
WO 2019/117028 (20.06.2019 Gazette 2019/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.12.2017  JP 2017236663
29.10.2018  JP 2018202586

(71) Applicant: Seiko Epson Corporation
Tokyo 160-8801 (JP)

(72) Inventors:
• ASAWA, Hiroshi
Nagano 392-8502 (JP)
• KUMAGAI, Toshio
Nagano 392-8502 (JP)
• ANDO, Masaaki
Nagano 392-8502 (JP)

(74) Representative: Miller Sturt Kenyon
9 John Street
London WC1N 2ES (GB)

(54) DUCKBILL VALVE, DIAPHRAGM PUMP, AND PRINTING DEVICE

(57) A duckbill valve is realized, which stably operates for a long time even when high pressure is applied to fluid. The duckbill valve including a first flow path formation part 40 including a first flow path 41 and a second flow path formation part 50 including, between the first wall part 52 and the second wall part 53, a second flow path 42 having a width increasing gradually toward the first flow path formation part 40. The second flow path formation part 50 has a slit 58 formed at a tip end part 57, and the second flow path 42 communicates with a downstream flow path FP2 when the slit 58 is opened, whereas the communication between the second flow path 42 and the downstream flow path FP2 is blocked when the slit 58 is closed. A value of ratio obtained by dividing an inner diameter L2 of the first flow path formation part 40 by an outer diameter L1 of the first flow path formation part 40 is smaller than 0.65, and a crossing angle θ between the first wall part 52 and the second wall part 53 is from 50 degrees to 65 degrees. The first wall part 52 and the second wall part 53 do not make contact with each other when the pressure difference of the second flow path 42 with respect to the pressure of the downstream flow path FP2 is -75kPa, which is a negative pressure.

FIG. 4

# Description

## Technical Field

The present disclosure relates to a duckbill valve, a diaphragm pump including the duckbill valve, and a printing apparatus including the diaphragm pump.

## Background Art

For example, PTL 1 discloses a fluid non-contact pump (diaphragm pump) in which a diaphragm and a piston for providing a feeding force to fluid do not make contact with the fluid, and impurities are not easily mixed in the fluid. The diaphragm pump disclosed in PTL 1 includes a fluid intake discharge chamber, a check valve (duckbill valve) that allows only the flow of fluid in the direction toward the fluid intake discharge chamber, and a check valve (duckbill valve) that allows only the flow of fluid in the direction out of the fluid intake discharge chamber. Specifically, the diaphragm pump is provided with a duckbill valve that opens and closes the flow path.

## Citation List

## Patent Literature

PTL 1: JP-A-2001-248560

## Summary of Invention

## Technical Problem

The inventors have studied employment of the diaphragm pump disclosed in PTL 1, as an ink supply pump of a printing apparatus that uses UV ink as fluid. UV ink has high viscosity and entails high flow path resistance, and as such, requires a pump that can output high pressure as the ink supply pump. However, when high pressure is output to the diaphragm pump disclosed in PTL 1, the duckbill valve disadvantageously deteriorates in a short time, thus making it difficult to stably supply the UV ink through the diaphragm pump.

That is, an object of the present application is to achieve a duckbill valve that stably operates for a long time even when high pressure is output using a diaphragm pump using a duckbill valve.

## Solution to Problem

The disclosure has been made to address at least some of the above-described issues and can be achieved as the following modes or application examples.

[Application Example 1] A duckbill valve according to this application example includes a first flow path formation part including a first flow path for fluid, and a second flow path formation part having a base end side supported by the first flow path formation part, and including between a first wall part and a second wall part a second flow path for the fluid, the second flow path having a width that increases gradually toward the first flow path formation part. The second flow path formation part has a slit formed at a tip end part on an opposite side from the base end side, and the second flow path communicates with outside when the slit is opened, and, communication between the second flow path and the outside is blocked when the slit is closed. A value of ratio obtained by dividing an inner diameter of the first flow path formation part by an outer diameter of the first flow path formation part is smaller than 0.65, an angle between the first wall part and the second wall part is within a range from 50 degrees to 65 degrees, and, when a pressure difference of the second flow path with respect to a pressure of the outside is -75kPa, which is a negative pressure, the first wall part and the second wall part do not make contact with each other.

In the case where UV ink is used as fluid, the UV ink has high viscosity and entails high flow path resistance, and as such requires a pump that can output high pressure as an ink supply pump. However, when high pressure is output to the diaphragm pump, the duckbill valve may not resist the high pressure and may deform more than expected and degrade in a short time. Further, the UV ink may be cured (polymerized) by mechanical sliding friction. When the duckbill valve is deformed more than expected, mechanical sliding friction occurs at the duckbill valve and the UV ink polymerizes at the portion where the mechanical sliding friction occurs, thus generating a hard polymer, which may cause mechanical damage to the duckbill valve.

The inner diameter of the first flow path formation part is the dimension of the first flow path (space) provided inside the first flow path formation part.

When the ratio value obtained by dividing the inner diameter of the first flow path formation part by the outer diameter of the first flow path formation part is large, the percentage of the space in the first flow path formation part is large. As a result, the thickness of the first flow path formation part is small, and the mechanical strength of the first flow path formation part is small. When the ratio value obtained by dividing the inner diameter of the first flow path formation part by the outer diameter of the first flow path formation part is small, the percentage of the space in the first flow path formation part is small. As a result, the thickness of the first flow path formation part is large and the mechanical strength of the first flow path formation part is high.

Therefore, when the ratio value obtained by dividing the inner diameter of the first flow path formation part by the outer diameter of the first flow path formation part is as small as 0.65, the mechanical strength of the first flow path formation part is high, and it is possible to reduce a problem in which it cannot resist the high pressure and deforms more than expected. Moreover, when the first flow path formation part is not easily deformed, the first wall part and the second wall part supported by the first flow path formation part are also not easily deformed, and, when the pressure difference of the second flow path with respect to the pressure of the outside is a negative pressure of -75kPa, the first wall part and the second wall part do not make contact with each other, thus making it possible to reduce occurrence of mechanical sliding friction. Thus, it is possible to reduce the problem in which the UV ink is cured by mechanical sliding friction.

In addition, when the angle between the first wall part and the second wall part is from 50 degrees to 65 degrees, the first wall part and the second wall part elastically deform without making contact with each other (without causing mechanical sliding friction), and the slit can be appropriately opened and closed.

Thus, the duckbill valve can stably operate for a long time when the pressure difference of the second flow path with respect to the pressure of the outside is a negative pressure of -75kPa, and the reliability of the duckbill valve can be increased. That is, a duckbill valve that stably operates for a long time even in the case where high pressure is output to the diaphragm pump can be achieved.

[Application Example 2] In the duckbill valve according to this application example, when the pressure difference of the second flow path with respect to the pressure of the outside is -90kPa, which is a negative pressure, the first wall and the second wall do not make contact with each other.

In the case where UV ink is used as fluid, it is difficult to obtain an appropriate flow rate without outputting a high pressure to the diaphragm pump since UV ink has a high viscosity and entails a high flow path resistance. Therefore, it is preferable that the pressure output by the diaphragm pump be high, and the case where the pressure difference of the second flow path with respect to the pressure of the outside is a negative pressure of -90kPa is more preferable than the case where the pressure difference of the second flow path with respect to the pressure of the outside is -75kPa.

With the configuration in which the first wall part and the second wall part do not make contact with each other when the pressure difference of the second flow path with respect to the pressure of the outside is a negative pressure of -90kPa, mechanical sliding friction between the first wall part and the second wall part is not easily caused, and it is possible to reduce a problem in which the UV ink is cured by mechanical sliding friction.

Thus, the duckbill valve can stably operate for a long time when the pressure difference of the second flow path with respect to the pressure of the outside is a negative pressure of -90kPa, and the reliability of the duckbill valve can be increased. That is, a duckbill valve that stably operates for a long time even in the case where high pressure is output to the diaphragm pump can be achieved.

[Application Example 3] In the duckbill valve according to this application example, the first flow path formation part and the second flow path formation part are formed of an elastic member including, as a main component, silicon.

The UV ink contains an acrylate-based monomer, and the acrylate-based monomer is generated through polymerization of an acrylic resin. In other words, the polymer generated through curing of the UV ink is an acrylic resin.

In the case where the first flow path formation part and the second flow path formation part are composed of an elastic member (e.g., silicon rubber) whose main component is silicon, the adhesion to the polymer (acrylic resin) generated through curing of the UV ink is poor since the elastic member whose main component is silicon has a lower surface tension and is not adhesive in comparison with other materials. Thus, even when the polymer generated through curing of the UV ink is built up at the first flow path formation part and the second flow path formation part, the polymer generated through the curing of the UV ink can be easily removed from the first flow path formation part and the second flow path formation part, and the negative influence of the polymer generated through the curing of the UV ink can be reduced.

[Application Example 4] A diaphragm pump according to this application example includes the duckbill valve of the above-described application example.

The duckbill valve described in the above application example stably operates for a long time and provides high reliability even in the case where high pressure is applied to the fluid. Accordingly, the diaphragm pump provided with the duckbill valve described in the above application example stably operates for a long time and provides high reliability even in the case where high pressure is applied to the fluid.

[Application Example 5] A printing apparatus according to this application example includes the diaphragm pump of the above-described application example.

The diaphragm pump described in the above application example stably operates for a long time and provides high reliability even in the case where high pressure is applied to the fluid. Thus, the printing apparatus provided with the diaphragm pump described in the above application example stably operates for a long time and provides high reliability even in the case where high pressure is applied to the fluid.

[Application Example 6] In the printing apparatus according to this application example, UV ink is supplied by the diaphragm pump.

The UV ink is cured in a short time through irradiation with UV light, and therefore the printing apparatus that discharges UV ink to perform printing on the medium provides high productivity. Further, the diaphragm pump stably operates for a long time and provides high reliability even in the case where high pressure is applied to the fluid. Accordingly, it is preferable to use the diaphragm pump in order to provide UV ink having a high viscosity that requires application of high pressure in the printing apparatus.

[Application Example 7] A duckbill valve according to this application example includes a first flow path formation part including a first flow path for fluid, and a second flow path formation part having a base end side supported by the first flow path formation part, and including between a first wall part and a second wall part a second flow path for the fluid, the second flow path having a width that increases gradually toward the first flow path formation part. The second flow path formation part has a slit formed at a tip end part on an opposite side from the base end side, and the second flow path communicates with outside when the slit is opened, and, communication between the second flow path and the outside is blocked when the slit is closed, and where L2 is an inner diameter of the first flow path formation part, L1 is an outer diameter of the first flow path formation part, L2/L1 is a ratio value obtained by dividing the inner diameter of the first flow path formation part by the outer diameter of the first flow path formation part, and θ is an angle between the first wall part and the second wall part, the first wall part and the second wall part do not make contact with each other under a condition (1) where L2/L1 is 0.65 and θ is from 57 to 70 degrees, a condition (2) where L2/L1 is equal to or greater than 0.51 and is smaller than 0.65, and, θ is from 50 degrees to 70 degrees, or a condition (3) where L2/L1 is equal to or greater than 0.36 and is smaller than 0.51, and, θ is from 38 degrees to 70 degrees, and in addition, when a pressure difference of the second flow path with respect to a pressure of the outside is a negative pressure of -75kPa.

In the case where UV ink is used as fluid, the UV ink has high viscosity and entails high flow path resistance, and as such requires a pump that can output high pressure as an ink supply pump. However, when high pressure is output to the diaphragm pump, the duckbill valve may not resist the high pressure and may deform more than expected and degrade in a short time. Further, the UV ink may be cured (polymerized) by mechanical sliding friction. When the duckbill valve is deformed more than expected, mechanical sliding friction occurs at the duckbill valve and the UV ink polymerizes at the portion where the mechanical sliding friction occurs, thus generating a hard polymer, which may cause mechanical damage to the duckbill valve.

Therefore, when the first wall part and the second wall part do not make contact with each other and mechanical sliding friction is reduced, the problem in which the UV ink is cured by mechanical sliding friction under the condition is not easily caused, and the duckbill valve stably operates for a long time.

In the duckbill valve according to the present application example, the first wall part and the second wall part do not make contact with each other under a condition (1) where L2/L1 is 0.65 and θ is from 57 to 70 degrees, a condition (2) where L2/L1 is equal to or greater than 0.51 and is smaller than 0.65, and, θ is from 50 degrees to 70 degrees, or a condition (3) where L2/L1 is equal to or greater than 0.36 and is smaller than 0.51, and, θ is from 38 degrees to 70 degrees, when the pressure difference of the second flow path with respect to a pressure of the outside is -75kPa, where L2/L1 is a ratio value obtained by dividing the inner diameter of the first flow path formation part by the outer diameter of the first flow path formation part, and θ is an angle between the first wall part and the second wall part. Thus, the problem in which the UV ink is cured by mechanical sliding friction under the condition is not easily caused, and stable operation for a long time is achieved.

[Application Example 8] A duckbill valve according to this application example includes a first flow path formation part including a first flow path for fluid, and a second flow path formation part havig a base end side supported by the first flow path formation part, and including between a first wall part and a second wall part a second flow path for the fluid, the second flow path having a width that increases gradually toward the first flow path formation part. The second flow path formation part has a slit formed at a tip end part on an opposite side from the base end side, and the second flow path communicates with outside when the slit is opened, and, communication between the second flow path and the outside is blocked when the slit is closed, and where L2 is an inner diameter of the first flow path formation part, L1 is an outer diameter of the first flow path formation part, L2/L1 is a ratio value obtained by dividing the inner diameter of the first flow path formation part by the outer diameter of the first flow path formation part, and θ is an angle between the first wall part and the second wall part, the first wall part and the second wall part do not make contact with each other under a condition (1) where L2/L1 is 0.65 and θ is from 65 to 70 degrees, a condition (2) where L2/L1 is equal to or greater than 0.51 and is smaller than 0.65, and, θ is from 50 degrees to 70 degrees, a condition (3) where L2/L1 is equal to or greater than 0.44 and is smaller than 0.51, and, θ is from 46 degrees to 70 degrees, or a condition (4) where L2/L1 is equal to or greater than 0.36 and is smaller than 0.44, and, θ is from 38 degrees to 70 degrees, and, in addition, when a pressure difference of the second flow path with respect to a pressure of the outside is a negative pressure of -90kPa.

In the case where UV ink is used as fluid, the UV ink has high viscosity and entails high flow path resistance, and as such requires a pump that can output high pressure as an ink supply pump. However, when high pressure is output to the diaphragm pump, the duckbill valve may not resist the high pressure and may deform more than expected and degrade in a short time. Further, the UV ink may be cured (polymerized) by mechanical sliding friction. When the duckbill valve is deformed more than expected, mechanical sliding friction occurs at the duckbill valve and the UV ink polymerizes at the portion where the mechanical sliding friction occurs, thus generating a hard polymer, which may cause mechanical damage to the duckbill valve.

Therefore, when the first wall part and the second wall part do not make contact with each other and mechanical sliding friction is reduced, the problem in which the UV ink is cured by mechanical sliding friction under the condition is not easily caused, and the duckbill valve stably operates for a long time.

In the duckbill valve according to the present application example, the first wall part and the second wall part do not make contact with each other under a condition (1) where L2/L1 is 0.65 and θ is from 65 to 70 degrees, a condition (2) where L2/L1 is equal to or greater than 0.51 and is smaller than 0.65, and, θ is from 50 degrees to 70 degrees, a condition (3) where L2/L1 is equal to or greater than 0.44 and is smaller than 0.51, and, θ is from 46 degrees to 70 degrees, or a condition (4) where L2/L1 is equal to or greater than 0.36 and is smaller than 0.44, and, θ is from 38 degrees to 70 degrees, when the pressure difference of the second flow path with respect to a pressure of the outside is -90kPa, L2/L1 is a ratio value obtained by dividing the inner diameter of the first flow path formation part by the outer diameter of the first flow path formation part, and θ is an angle between the first wall part and the second wall part. Thus, the problem in which the UV ink is cured by mechanical sliding friction under the condition is not easily caused, and stable operation for a long time is achieved.

Brief Description of Drawings

FIG. 1 is a perspective view of a duckbill valve according to Embodiment 1.
FIG. 2 is a side view of the duckbill valve illustrated in FIG. 1.
FIG. 3 is a front view of the duckbill valve illustrated in FIG. 1.
FIG. 4 is a cross-sectional view taken along A-A of FIG. 1.
FIG. 5 is a plan view of a first flow path formation part.
FIG. 6 is another cross-sectional view of the duckbill valve in a closed state.
FIG. 7 is a cross-sectional view of the duckbill valve in an open state.
FIG. 8 is a cross-sectional view illustrating a closed state of an undesirable duckbill valve.
FIG. 9 is a table showing a relationship between conditions of the duckbill valve and the performance of the duckbill valve.
FIG. 10 is a cross-sectional view of a duckbill valve of new condition 2.
FIG. 11 is a table showing a relationship between conditions of the duckbill valve and the performance of the duckbill valve when a pressure difference ΔP is -75kPa.
FIG. 12 is a table showing a relationship between conditions of the duckbill valve and the performance of the duckbill valve when the pressure difference ΔP is -90kPa.
FIG. 13 is a perspective view illustrating an appearance of a diaphragm pump according to Embodiment 2.
FIG. 14 is a cross-sectional view illustrating a state transition of a schematic configuration of the diaphragm pump.
FIG. 15 is a cross-sectional view illustrating a state transition of a schematic configuration of the diaphragm pump.
FIG. 16 is a cross-sectional view illustrating a state transition of a schematic configuration of the diaphragm pump.
FIG. 17 is a perspective view of a first housing of the diaphragm pump as viewed from a fluid intake discharge chamber side.
FIG. 18 is a cross-sectional view taken along B-B of FIG. 17.
FIG. 19 is a schematic view of a configuration of a printing apparatus according to Embodiment 3.
FIG. 20 is a schematic view of a configuration of an ink supply system.

Description of Embodiments

Embodiments of the disclosure are described below with reference to the accompanying drawings. The embodiments each illustrate an aspect of the disclosure, and do not limit the disclosure. Any modification of the embodiments may be made within the scope of the technical concept of the disclosure. In the drawings, each layer and/or portion is not necessarily drawn to scale for the sake of illustration of each layer and/or each portion in recognizable sizes.

Embodiment 1

Overview of Duckbill Valve

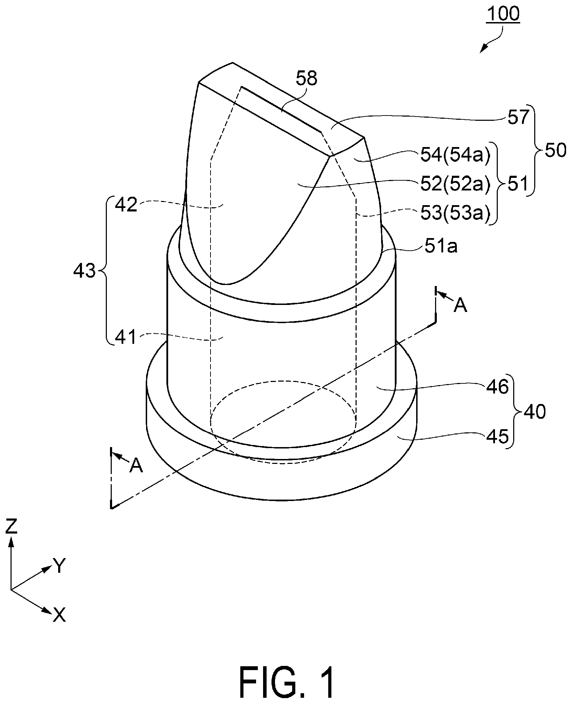

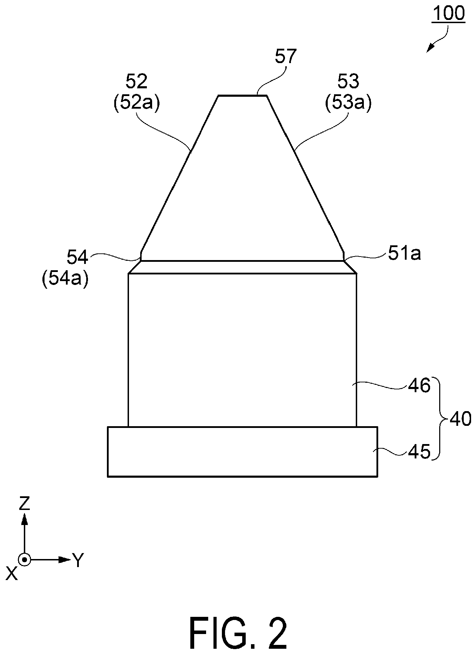

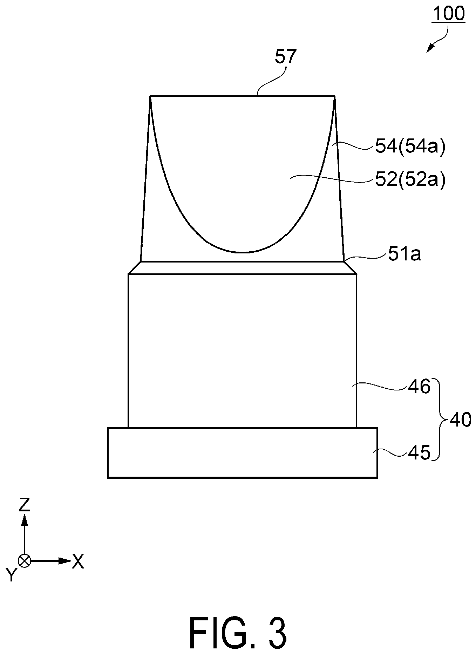

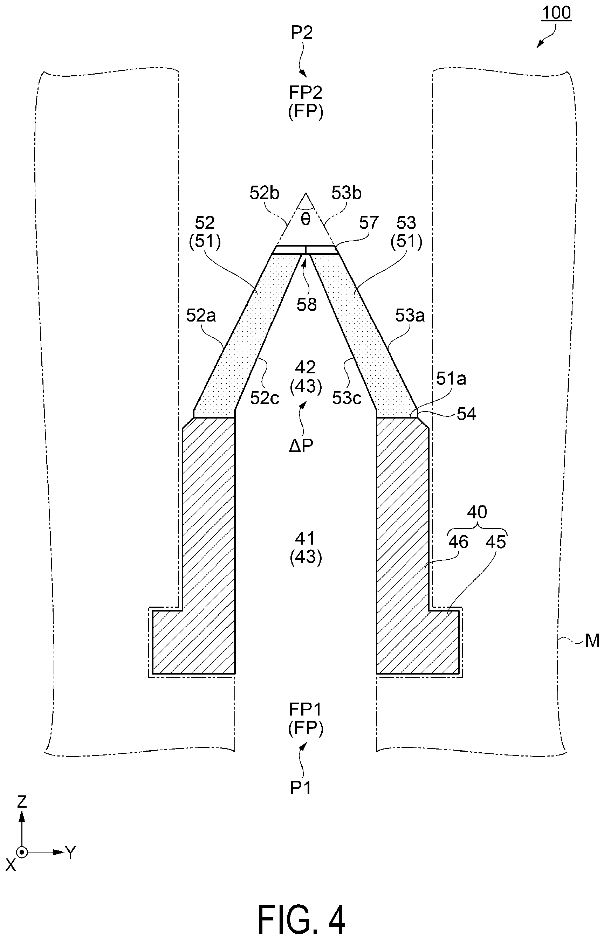

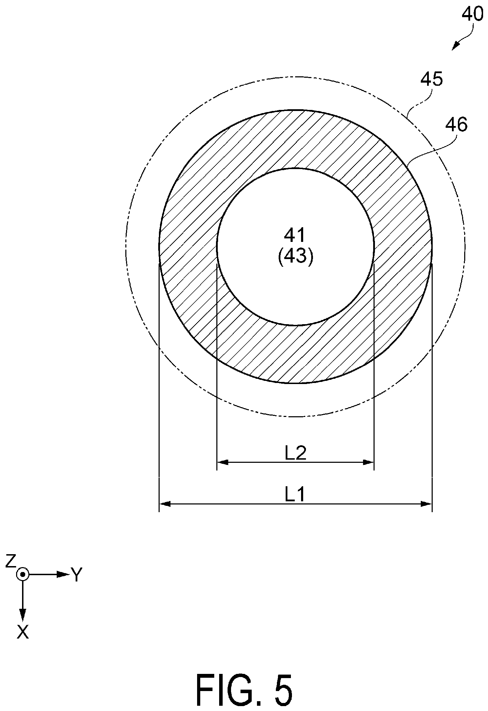

FIG. 1 is a perspective view of a duckbill valve according to Embodiment 1. FIG. 2 is a side view (a view as viewed from the X direction side) of the duckbill valve illustrated in FIG. 1. FIG. 3 is a front view (a view as viewed from the Y-direction side) of the duckbill valve illustrated in FIG. 1. FIG. 4 is a cross-sectional view taken along A-A of FIG. 1 and illustrates the duckbill valve in a closed state. FIG. 5 is a plan view (a plan view as viewed from the Z-direction side) of a first flow path formation part and illustrates a state where the duckbill valve illustrated in FIG. 1 is viewed from the upper side.

FIG. 1 illustrates a duckbill valve 100 in an upright state. In FIG. 4, a first flow path formation part 40 is illustrated with a hatched solid line, wall parts 52 and 53 of a second flow path formation part 50 are illustrated with a shaded solid line, and a tip end part 57 of the second flow path formation part 50 is illustrated with a white-filled solid line. In FIG. 5, a flange part 45 of the first flow path formation part 40 is illustrated with a two-dot chain line, and a main body part 46 of the first flow path formation part 40 is illustrated with a hatched solid line.

First, an overview of the duckbill valve 100 according to this embodiment is described with reference to FIGS. 1 to 5.

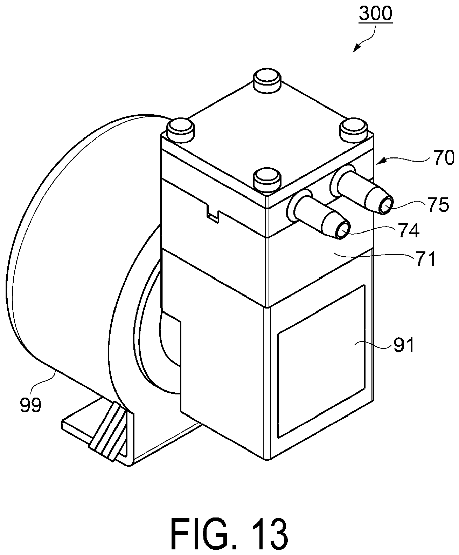

As illustrated in FIGS. 1 to 5, the duckbill valve 100 according to this embodiment is mounted to a target object M (e.g., a diaphragm pump 300 (see FIG. 13) illustrated with a two-dot chain line in the drawings, and one end (flange part 45) of the duckbill valve 100 is fixed to the target object M. The other end (tip end part 57) of the duckbill valve 100 is provided with a slit 58 extending in one direction.

In the following description, the direction from one end (flange part 45) toward the other end (tip end part 57) of the duckbill valve 100 is set as the Z direction, the extending direction of the slit 58 is set as the X direction, and the direction intersecting the Z direction and the X direction is set as the Y direction. In addition, the leading-end side of an arrow indicating a direction is set as the (+) direction and the base end side of the arrow is set as the (-) direction.

The target object M includes a flow path FP through which ink, which is an example of the "fluid", flows. When the duckbill valve 100 is mounted to the target object M, the flow path FP of the target object M is sectioned into a flow path FP1 located on the Z (-) direction side with respect to the duckbill valve 100 and a flow path FP2 located on the Z (+) direction side with respect to the duckbill valve 100.

Note that the flow path FP2 of the target object M is an example of the "outside", and is hereinafter referred to as a downstream flow path FP2. The flow path FP1 of the target object M is referred to as an upstream flow path FP1.

The duckbill valve 100 is composed of an elastic member (silicon rubber) whose main component is silicon. The duckbill valve 100 is elastically deformable and includes therein a flow path (space) 43 through which ink flows. In other words, the first flow path formation part 40 and the second flow path formation part 50 are composed of an elastic member whose main component is silicon. The duckbill valve 100 includes the first flow path formation part 40 and the second flow path formation part 50 supported by the first flow path formation part 40. The first flow path formation part 40 and the second flow path formation part 50 are sequentially arranged along the Z direction.

The first flow path formation part 40 has a cylindrical shape and includes a first flow path (space) 41 through which ink flows inside the first flow path formation part 40. The first flow path formation part 40 includes the main body part 46 disposed on the Z (+) direction side and the flange part 45 disposed on the Z (-) direction side. The flange part 45 is fixed to the target object M and supports the main body part 46.

When viewed from the Z direction side, the flange part 45 and the main body part 46 have circular shapes, and the flange part 45 is larger than the main body part 46 and protrudes beyond the main body part 46. The flange part 45 is fixed to the target object M and functions as a sealing ring or a sealing bead. When the first flow path formation part 40 is mounted to the target object M through the flange part 45, the flange part 45 is fixed to the target object M such that displacement (deformation) is suppressed, while the main body part 46 is not fixed to the target object M and is elastically deformable. Further, when the first flow path formation part 40 is mounted to the target object M through the flange part 45, the upstream flow path FP1 of the target object M and the first flow path 41 of the first flow path formation part 40 are communicated with each other in a state where no leakage occurs.

A dimension L1 of the main body part 46 (first flow path formation part 40) is an example of the "outer diameter of the first flow path formation part", and is hereinafter referred to as an outer diameter L1. A dimension L2 of the first flow path 41 (first flow path formation part 40) is an example of the "inner diameter of the first flow path formation part", and is hereinafter referred to as an inner diameter L2.

In this embodiment, the ratio value obtained by dividing the inner diameter L2 of the first flow path formation part 40 by the outer diameter L1 of the first flow path formation part 40 is set to a value smaller than 0.65.

The second flow path formation part 50 is a member having a duck's bill-like shape (duckbill shape) and includes a second flow path (space) 42 therein. Thus, the flow path 43 of the duckbill valve 100 is composed of the first flow path 41 of the first flow path formation part 40 and the second flow path 42 of the second flow path formation part 50, and is communicated with the upstream flow path FP1 of the target object M.

The second flow path formation part 50 includes a main body part 51 disposed on the Z (-) direction side and the tip end part 57 disposed on the Z (+) direction side. The end portion of the second flow path formation part 50 on the Z (+) direction side is the tip end part 57. The end of the second flow path formation part 50 on the Z (-) direction side is a base end 51a of the main body part 51. The base end 51a side of the second flow path formation part 50 is supported by the first flow path formation part 40 (main body part 46).

A slit 58 extending in the X direction is provided in the tip end part 57. The slit 58 is a cut provided in the tip end part 57. As elaborated later, when the slit 58 is opened and closed, a state where the second flow path 42 and the downstream flow path FP2 are communicated with each other, or a state where communication between the second flow path 42 and the downstream flow path FP2 is blocked is set. Specifically, in the second flow path formation part 50, the slit 58 is formed in the tip end part 57 on the side opposite to the base end 51a side, and the second flow path 42 and the downstream flow path FP2 are communicated with each other when the slit 58 is opened, whereas the communication between the second flow path 42 and the downstream flow path FP2 is blocked when the slit 58 is closed.

In the following description, a state where the slit 58 is opened and the second flow path 42 and the downstream flow path FP2 are communicated with each other is referred to as an open state, and a state where the slit 58 is closed and the communication between the second flow path 42 and the downstream flow path FP2 is blocked is referred to as a closed state.

The main body part 51 includes a first wall part 52, a second wall part 53, and a peripheral part 54. The peripheral part 54 is a part disposed between the first wall part 52 and the second wall part 53 in the main body part 51. The first wall part 52, the second wall part 53, and the peripheral part 54 extend from the tip end part 57 toward the base end 51a and form the main body part 51. The space enclosed by the first wall part 52, the second wall part 53, and the peripheral part 54 is the second flow path 42. The first wall part 52, the second wall part 53, and the peripheral part 54 are not fixed to the target object M, and are elastically deformable.

The first wall part 52 includes an outer circumferential surface 52a and an inner circumferential surface 52c disposed opposite the outer circumferential surface 52a. The second wall part 53 includes an outer circumferential surface 53a and an inner circumferential surface 53c disposed opposite the outer circumferential surface 53a. The peripheral part 54 includes an outer circumferential surface 54a. The surface of the second flow path formation part 50 opposite the second flow path 42 side is the outer circumferential surfaces 52a, 53a and 54a. The surface of the second flow path formation part 50 on the second flow path 42 side is the inner circumferential surfaces 52c and 53c. The outer circumferential surface 52a of the first wall part 52 and the outer circumferential surface 53a of the second wall part 53 are flat surfaces and have a parabolic outline. The outer circumferential surface 54a of the peripheral part 54 is a curved surface.

The first wall part 52 and the second wall part 53 are disposed opposite each other with the slit 58 sandwiched therebetween, and separate from each other. The distance of the space between the first wall part 52 and the second wall part 53 increases in the Z (-) direction, i.e., in the direction toward the first flow path formation part 40. Thus, the closer the second flow path 42 disposed between the first wall part 52 and the second wall part 53 is to the first flow path formation part 40, the greater the width of the second flow path 42.

In FIG. 4, a virtual surface 52b obtained by extending the outer circumferential surface 52a of the first wall part 52 in the Z (+) direction, and a virtual surface 53b obtained by extending the outer circumferential surface 53a of the second wall part 53 in the Z (+) direction are illustrated with two-dot chain lines. The angle between the virtual surface 52b of the first wall part 52 and the virtual surface 53b of the second wall part 53 is θ.

Note that the angle θ between the outer circumferential surface 52a of the first wall part 52 and the outer circumferential surface 53a of the second wall part 53 (the angle θ between the virtual surface 52b of the first wall part 52 and the virtual surface 53b of the second wall part 53) is an example of the "angle between the first wall part and the second wall part", and is hereinafter referred to as a crossing angle θ.

In this embodiment, the crossing angle θ is set within a range from 50 degrees and to 65 degrees.

Further, in the duckbill valve 100, the flange part 45, the main body part 46, the wall parts 52 and 53, and the tip end part 57 are sequentially arranged in the Z direction, and the main body part 46 is thicker and less easily deformed than the wall parts 52 and 53. The wall parts 52 and 53 are thinner and more easily deformed than the main body part 46. The closer the wall parts 52 and 53 are to the tip end part 57 (slit 58), the smaller the thickness of the wall parts 52 and 53 and the more easily the wall parts 52 and 53 are deformed. Further, the tip end part 57 where the slit 58 is provided is thinner and more easily deformed than the wall parts 52 and 53.

As elaborated later, in the duckbill valve 100, the wall parts 52 and 53 and the tip end part 57 are deformed and the slit 58 is opened and closed such that the open state and the closed state are repetitively set in the state where the flange part 45 and the main body part 46 are not deformed.

Note that when the duckbill valve 100 is easily deformed in the direction toward the slit 58, the slit 58 can stably repeat the opening and closing, and the duckbill valve 100 can stably repetitively set the open state and the closed state. Therefore, the wall parts 52 and 53 are preferably configured such that the closer to the slit 58, the smaller the thickness of the wall parts 52 and 53 and the more easily the wall parts 52 and 53 are deformed. Further, the tip end part 57 where the slit 58 is provided is preferably configured to be thinner and more deformable than the wall parts 52 and 53.

Further, the flange part 45 and the main body part 46 are members that support the wall parts 52 and 53 and the tip end part 57, and are preferably thicker and less deformable than the wall parts 52 and 53 in order to stably support the wall parts 52 and 53 and the tip end part 57. While a plurality of members (the first wall part 52, the second wall part 53, the peripheral part 54, the tip end part 57, the flange part 45, and the main body part 46) of the duckbill valve 100 are separately described for convenience, the members are contiguously molded in one piece.

Operation of Duckbill Valve

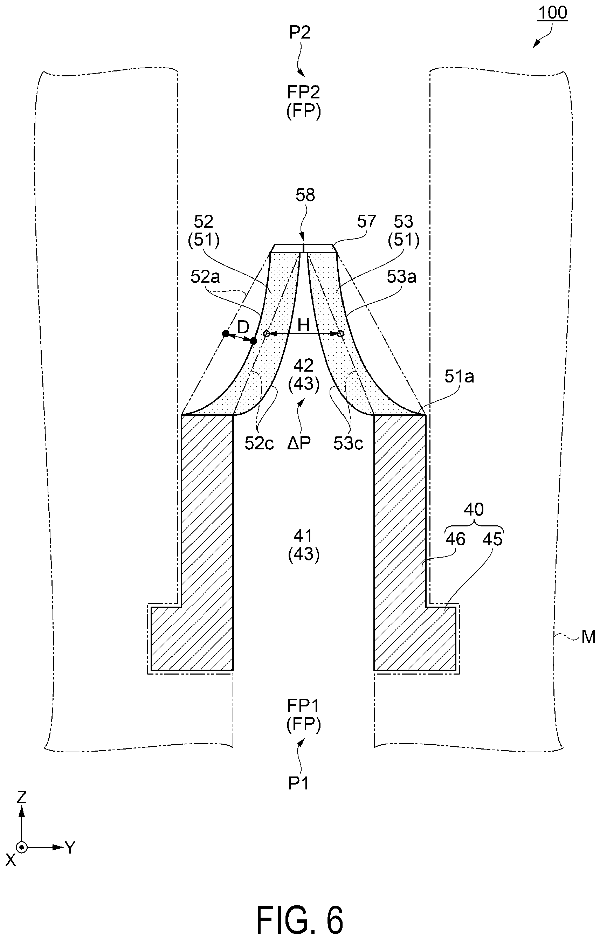

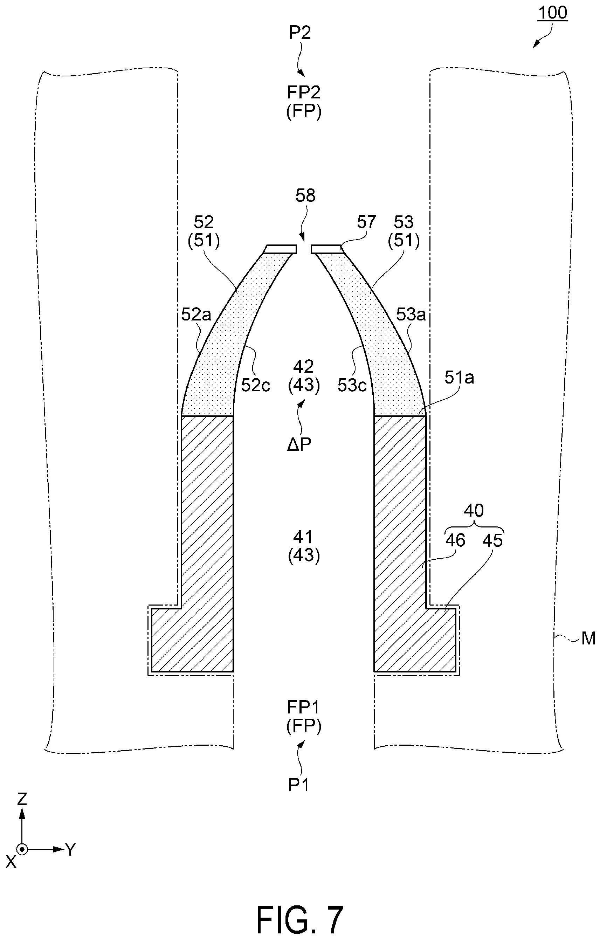

FIG. 6 corresponds to FIG. 4, and is another cross-sectional view of the duckbill valve in a closed state. FIG. 7 corresponds to FIG. 4, and is a cross-sectional view of the duckbill valve in an open state.

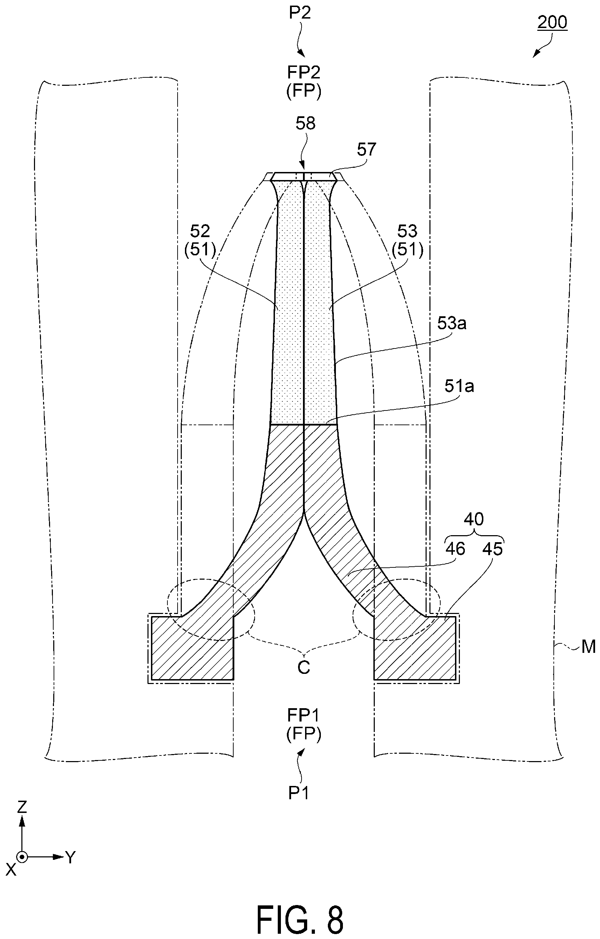

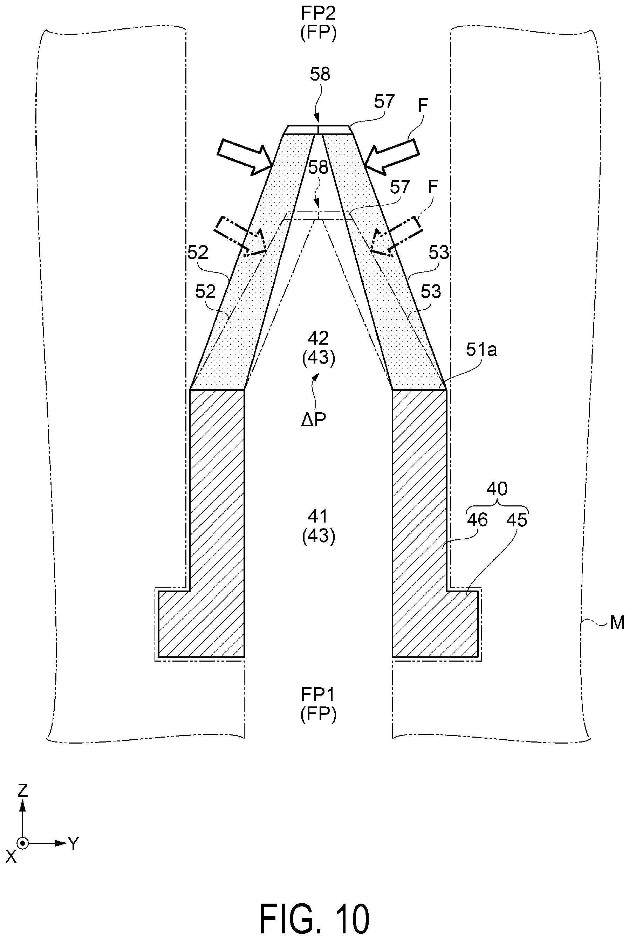

Note that, in FIGS. 6 and 7, illustration of the peripheral part 54 and the like is omitted to concisely illustrate the states of the duckbill valve 100. Further, the illustration of the peripheral part 54 and the like are omitted also in FIGS. 8 and 10, which will be described later. Further, in FIG. 6, the wall parts 52 and 53 that are deformed are illustrated with a solid line, and the wall parts 52 and 53 that are not deformed are illustrated with a two-dot chain line.

Next, an operation of the duckbill valve 100 is described with reference to FIGS. 4, 6, and 7.

In FIGS. 4, 6, and 7, the pressure applied to the fluid (ink) in the upstream flow path FP1 of the target object M is P1, and the pressure applied to the ink in the downstream flow path FP2 of the target object M is P2. In other words, the pressure of the upstream flow path FP1 is P1, and the pressure of the downstream flow path FP2 is P2. The second flow path 42 of the second flow path formation part 50 is communicated with the upstream flow path FP1 of the target object M through the first flow path 41 of the first flow path formation part 40, and therefore the pressure of the second flow path 42 and the pressure of the first flow path 41 are P1 as with the pressure of the upstream flow path FP1.

In this case, a pressure difference ΔP of the second flow path 42 with respect to the pressure P2 of the downstream flow path FP2 is expressed by Equation (1) below.

$$\Delta P = P1 - P2 \quad (1)$$

As expressed in Equation (1), the pressure difference ΔP of the second flow path 42 with respect to the pressure P2 of the downstream flow path FP2 is expressed by the difference obtained by subtracting the pressure P2 of the downstream flow path FP2 from the pressure P1 of the second flow path 42 (the pressure P1 of the flow paths 41 and 42).

Note that the pressure difference ΔP of the second flow path 42 with respect to the pressure P2 of the downstream flow path FP2 is an example of the "pressure difference of the second flow path with respect to the pressure of the outside", and is hereinafter simply referred to as a pressure difference ΔP.

When the pressure difference ΔP is negative, or in other words, when the pressure P1 of the flow paths 41 and 42 (the pressure P1 of the upstream flow path FP1) is lower than the pressure P2 of the downstream flow path FP2, a force that acts to constrict the duckbill valve 100 (the first flow path formation part 40 and the second flow path formation part 50) is exerted. When the pressure difference ΔP is positive, or in other words, when the pressure P1 of the flow paths 41 and 42 (the pressure P1 of the upstream flow path FP1) is higher than the pressure P2 of the downstream flow path FP2, a force that acts to expand the duckbill valve 100 (the first flow path formation part 40 and the second flow path formation part 50) is exerted.

In the following description, the case where the pressure difference ΔP is negative is referred to as a case where a negative pressure is applied to the duckbill valve 100, and the case where the pressure difference ΔP is positive is referred to as a case where a positive pressure is applied to the duckbill valve 100. Further, the case where the pressure difference ΔP is negative and the pressure difference between the pressure P2 of the downstream flow path FP2 and the pressure P1 of the flow paths 41 and 42 (the pressure P1 of the upstream flow path FP1) is high is referred to as a case where the negative pressure applied to the duckbill valve 100 is high, and the case where the pressure difference between the pressure P2 of the downstream flow path FP2 and the pressure P1 of the flow paths 41 and 42 (the pressure P1 of the upstream flow paths 41 and 42) is small is referred to as a case where the negative pressure applied to the duckbill valve 100 is low.

As illustrated in FIG. 4, when the pressure difference ΔP is zero, or in other words, when the pressure P2 of the downstream flow path FP2 and the pressure P1 of the flow paths 41 and 42 are equal to each other, the duckbill valve 100 is in the closed state where the slit 58 is closed, and the communication between the second flow path 42 and the downstream flow path FP2 is blocked.

When the pressure difference ΔP is negative, or in other words, when the pressure P1 of the flow paths 41 and 42 is lower than the pressure P2 of the downstream flow path FP2, a force that acts to constrict the duckbill valve 100 is exerted. In other words, a force that acts to bring the first wall part 52 and the second wall part 53 close to each other is exerted.

When the negative pressure applied to the duckbill valve 100 is low, the first wall part 52 and the second wall part 53 are not deformed, and the duckbill valve 100 is set to the closed state where the slit 58 is closed, and the communication between the second flow path 42 and the downstream flow path FP2 is blocked as illustrated in FIG. 4.

When the negative pressure applied to the duckbill valve 100 is high, the first wall part 52 and the second wall part 53 are deformed in the approaching direction, and the duckbill valve 100 is set to the closed state where the slit 58 is closed, and the communication between the second flow path 42 and the downstream flow path FP2 is blocked as illustrated in FIG. 6. In other words, the first wall part 52 and the second wall part 53 deform without making contact with each other, and the duckbill valve 100 is set to the closed state.

Since the main body part 46 of the first flow path formation part 40 is less easily deformed in comparison with the wall parts 52 and 53, the main body part 46 does not deform even when the negative pressure applied to the duckbill valve 100 is high, and maintains the shape that is set when the pressure difference ΔP is zero.

When the pressure difference ΔP is positive, or in other words, when the pressure P1 of the flow paths 41 and 42 is higher than the pressure P2 of the downstream flow path FP2, a force that acts to expand the duckbill valve 100 is exerted. In other words, a force that acts to separate the first wall part 52 and the second wall part 53 from each other is exerted. As a result, as illustrated in FIG. 7, the first wall part 52 and the second wall part 53 are deformed in the separating direction such that the duckbill valve 100 is set to the open state where the slit 58 is open, and the second flow path 42 and the downstream flow path FP2 communicate with each other.

Specifically, when the pressure difference ΔP is smaller than several kilopascals, the duckbill valve 100 maintains the closed state where the slit 58 is closed, and when the pressure difference ΔP is several kilopascals or greater, the duckbill valve 100 is set to the open state where the slit 58 is open, and the second flow path 42 and the downstream flow path FP2 communicate with each other.

In this manner, when a negative pressure is applied to the duckbill valve 100 (specifically, when the pressure difference ΔP is smaller than several kilopascals), the duckbill valve 100 is set to the closed state, and when a positive pressure is applied to the duckbill valve 100 (specifically, when the pressure difference ΔP is several kilopascals or greater), the duckbill valve 100 is set to the open state.

As described above, the duckbill valve 100 is composed of an elastic member (silicon rubber) whose main component is silicon and is elastically deformable. In this embodiment, in the state where the deformation of the main body part 46 of the first flow path formation part 40 is suppressed, the wall parts 52 and 53 elastically deform without making contact with each other so as to repetitively set the state where the slit 58 is open (open state) and the state where the slit 58 is closed (closed state).

Problems of Duckbill Valve

FIG. 8 illustrates a duckbill valve of the related art that corresponds to FIG. 4, and illustrates a closed state of an undesirable duckbill valve.

Next, a problem of a duckbill valve 200 of the related art will be described with reference to FIG. 8. Further, the duckbill valve 100 according to this embodiment has an excellent configuration that ease the problems of the duckbill valve 200 of the related art, and therefore details thereof will be also described.

As described above, in the duckbill valve 100 according to this embodiment, when the pressure difference ΔP is negative, a force acting to constrict the duckbill valve 100 (the first flow path formation part 40 and the second flow path formation part 50) is exerted, and when the negative pressure is excessively high, the first wall part 52 and the second wall part 53 of the second flow path formation part 50 elastically deform without making contact with each other. On the other hand, the main body part 46 of the first flow path formation part 40 is less easily deformed than the wall parts 52 and 53 of the second flow path formation part 50, and a force against the force that acts to constrict the first flow path formation part 40 (main body part 46) works, and thus constriction (deformation) of the main body part 46 is suppressed.

Since the flange part 45 is fixed to the target object M, deformation of the flange part 45 is suppressed even when the negative pressure applied to the duckbill valve 100 is excessively high.

On the other hand, in the duckbill valve 200 of the related art, the main body part 46 of the first flow path formation part 40 is not fixed to the target object M. Consequently, when the negative pressure applied to the duckbill valve 200 is excessively high, the repulsion against the negative pressure becomes insufficient, and the main body part 46 elastically deforms.

Specifically, as illustrated in FIG. 8, when the negative pressure applied to the duckbill valve 200 is excessively high, the entirety of the main body part 46 deforms such that the main body part 46 deforms into a crushed shape, and the duckbill valve 200 is set to the closed state.

As described above, the shape of the main body part 46 is a circular shape as viewed from the Z direction side. When the shape of main body part 46 as viewed from the Z direction side is a circular shape, the force uniformly acts on the main body part 46 of the main body part 46, and a portion where a strong force acts on the main body part 46 and a portion where a small force acts on the main body part 46 are less formed. For example, when a portion where a strong force acts on the main body part 46 is formed, the main body part 46 deforms at the portion where the strong force acts on the main body part 46, and the main body part 46 easily deforms in a crushed manner in its entirety due to the deformed portion as the trigger. Therefore, it is preferable that the shape of the main body part 46 as viewed from the Z direction side be a circular shape.

However, even in the case where the main body part 46 has a circular shape, the main body part 46 deforms into a crushed shape when the negative pressure applied to the duckbill valve 200 is excessively high.

In this manner, in the duckbill valve 200 of the related art, when the negative pressure applied to the duckbill valve 200 is excessively high, the main body part 46 deforms into a crushed shape such that the duckbill valve 200 is set to the closed state, and thus the communication between the second flow path 42 and the downstream flow path FP2 is blocked. Further, as indicated by the two-dot chain line in the drawing, when the pressure difference ΔP becomes positive, the main body part 46 is reset to an uncrushed state such that the duckbill valve 200 is set to the open state, and the second flow path 42 and the downstream flow path FP2 are communicated with each other.

Then, the duckbill valve 200 is repetitively set to the state where the main body part 46 is crushed (closed state) and the state where the main body part 46 is not crushed (open state). As a result, in the region C enclosed by the dashed line in the drawing, or in other words, in the region supported by the flange part 45 in the main body part 46, stress concentration occurs, the main body part 46 is torn, and defects such as crack (break) occurs. Consequently, the ink leaks from the portion where the defect is caused, and the duckbill valve 200 becomes defective.

Therefore, in the duckbill valve 100 according to this embodiment, it is important that the main body part 46 of the first flow path formation part 40 be not easily deformed even when the negative pressure applied to the duckbill valve 100 is excessively high.

When the negative pressure applied to the duckbill valve 200 is excessively high, the main body part 46 of the first flow path formation part 40 deforms into a crushed state, and further, the wall parts 52 and 53 of the second flow path formation part 50 also deform into a crushed state such that the wall parts 52 and 53 partially make contact with each other. Specifically, the surfaces of the wall parts 52 and 53 facing each other make contact with each other.

As indicated by the two-dot chain line in the drawing, when the pressure difference ΔP becomes positive, the state is reset to the state where the wall parts 52 and 53 are not in contact with each other (the state where the wall parts 52 and 53 are separated) such that the duckbill valve 200 is set to the open state, and the second flow path 42 and the downstream flow path FP2 are communicated with each other.

As a result, the duckbill valve 200 is repetitively set to the state (closed state) where the wall parts 52 and 53 are in contact with each other and the state (open state) where the wall parts 52 and 53 are separated from each other.

As elaborated later, the target object M is the diaphragm pump 300 including the duckbill valve 100, and is employed in a printing apparatus 1000 that uses UV-curable ink. Accordingly, the fluid flowing through the flow path FP of the target object M and the flow path 43 of the duckbill valve 100 is the UV-curable ink (hereinafter, referred to as UV ink).

The UV ink is a solution containing an acrylate-based monomer, a photopolymerization initiator, a pigment, and the like. When the UV ink is irradiated with UV light, the photopolymerization initiator generates a free radical (radical). The free radical reacts with the acrylate-based monomer to generate a new free radical, and the reaction that generates a new free radical is repeated. Thus, through polymerization of the acrylate-based monomer, a polymer (acrylic resin) containing a pigment is generated.

When the photopolymerization initiator is irradiated with UV light, the atomic bonds are broken and a free radical (radical) is generated. The ease of breakage of the atomic bonds differs depending on the chemical structure of the photopolymerization initiator. The printing apparatus 1000 uses a photopolymerization initiator that more easily generates a free radical (radical) in which the atomic bond is breakable with less light energy. In other words, in the printing apparatus 1000, the reactivity of the photopolymerization initiator is high, and the UV ink is cured with less light energy.

In the printing apparatus 1000, the UV ink is cured with less light energy, and therefore, in comparison with the case where the UV ink is cured with high light energy, the UV ink is cured in a short time with the same light energy. Thus, the processing time can be shortened, and the processing capacity (productivity) can be increased.

However, when the reactivity of the photopolymerization initiator is increased, the photopolymerization initiator may decompose and a free radical may be generated due to other factors than UV irradiation, such as mechanical sliding friction. Further, when a free radical is generated due to mechanical sliding friction, a polymer (acrylic resin) containing a pigment is generated through polymerization of the acrylate-based monomer. In other words, a polymer (acrylic resin) containing a pigment is generated at the portion where mechanical sliding friction occurs.

When the contact and separation of the wall parts 52 and 53 are repeated and mechanical sliding friction occurs at the wall parts 52 and 53, the UV ink is cured and a polymer containing a pigment is generated at the portion where the mechanical sliding friction occurs. Then, in the state where the polymer including the pigment is sandwiched between the first wall part 52 and the second wall part 53, the wall parts 52 and 53 repeats contact and separation.

The pigment is inorganic matter and is harder than the wall parts 52 and 53 (silicon rubber), and as such, the wall parts 52 and 53 repeat contact and separation in the state where foreign matter (the polymer including the pigment) harder than the wall parts 52 and 53 is sandwiched between the first wall part 52 and the second wall part 53. As a result, the wall parts 52 and 53 are scraped by the hard foreign matter (the polymer including the pigment), and defects such as pinholes and cracks occur. This results in leakage of the ink from the portion where the defects have occurred, and the duckbill valve 200 becomes defective.

As described above, disadvantageously, in the duckbill valve 200 of the related art, the main body part 46 is deformed in a crushed manner when the negative pressure applied to the duckbill valve 200 is excessively high, and defects easily occur in the region supported by the flange part 45 in the main body part 46. Further, disadvantageously, in the duckbill valve 200 of the related art, the wall parts 52 and 53 repeats contact and separation when the negative pressure applied to the duckbill valve 200 is high, and hard foreign matter (a polymer containing a pigment) is generated at the portion where the contact and separation are repeated, and as a result, defects easily occur at the wall parts 52 and 53.

The slit 58 also repeats contact and separation and switches the duckbill valve 200 between the closed state and the open state. The slit 58 is a part where contact and separation are repeated. Therefore, also in the slit 58, the photopolymerization initiator is decomposed and a free radical is generated, and, a polymer (acrylic resin) including a pigment is generated through polymerization of the acrylate-based monomer as in the wall parts 52 and 53.

The slit 58 deflects and deforms to repeat the contact and separation, and the deflection and deformation of the slit 58 further facilitate removal of the polymer including the pigment from the slit 58. Moreover, the duckbill valve 200 of the related art and the duckbill valve 100 of this embodiment are composed of an elastic member (silicon rubber) whose main component is silicon. In comparison with other materials, the elastic member (silicon rubber) whose main component is silicon has a lower surface tension and is not adhesive. Therefore, a polymer (acrylic resin) containing a pigment generated through polymerization of an acrylate-based monomer has a small adhesion to an elastic member (silicon rubber) whose main component is silicon, and is easily removed from the elastic member whose main component is silicon. Furthermore, the flow path that is formed when the slit 58 is open is narrower than the second flow path 42, and, in the flow path that is formed when the slit 58 is open, the ink flows faster than in the second flow path 42, and consequently, the polymer including the pigment is pushed by the ink that flows fast, thus further facilitating removal from the slit 58.

As a result, the polymer including the pigment formed through the contact and separation of the slit 58 is removed from the slit 58 and discharged to the downstream flow path FP2 together with the ink. Therefore, the problem of scraping by hard foreign matter (a polymer including a pigment) is less caused at the slit 58.

As described above, the negative influence of the hard foreign matter (the polymer including the pigment) formed at the portion where contact and separation are repeated tends to be significant at the wall parts 52 and 53.

If the duckbill valve 200 of the related art and the duckbill valve 100 of this embodiment are not composed of an elastic member (silicon rubber) whose main component is silicon, the polymer containing the pigment (acrylic resin) strongly adheres to the wall parts 52 and 53, and consequently the negative influence of the polymer including the pigment is further significant. As a result, the wall parts 52 and 53 are more easily scraped by the polymer containing the pigment, and defects of the wall parts 52 and 53 more easily occur.

Therefore, the duckbill valve 100 is preferably composed of an elastic member (silicon rubber) whose main component is silicon.

However, it is important to prevent generation of the polymer containing the pigment at the wall parts 52 and 53 since the polymer containing the pigment has the negative influence on the wall parts 52 and 53 even in the case where the duckbill valve 100 is composed of an elastic member (silicon rubber) whose main component is silicon. Specifically, it is important to prevent the contact between the first wall part 52 and the second wall part 53 since the polymer including the pigment is generated through the repetitive contact and separation of the wall parts 52 and 53. Specifically, it is important to appropriately cause elastic deformation of the wall parts 52 and 53 so that the wall parts 52 and 53 do not make contact with each other under the negative pressure applied to the duckbill valve 100.

Note that the appropriate elastic deformation of the wall parts 52 and 53 means elastic deformation of the wall parts 52 and 53 that repetitively sets the state illustrated in FIGS. 4 and 6 and the state illustrated in FIG. 7.

Further, in order to ease the problem in which defects easily occur in the region supported by the flange part 45 in the main body part 46 due to deformation of the main body part 46 in a crushed manner, it is important that the main body part 46 be not easily deformed under the negative pressure applied to the duckbill valve 100.

However, since the wall parts 52 and 53 and the main body part 46 are composed of the same material, there is a tradeoff between the appropriate elastic deformation of the wall parts 52 and 53 and the suppression of the deformation of the main body part 46 under the negative pressure applied to the duckbill valve 100. For example, when the mechanical strength of the duckbill valve 100 is increased, deformation of the main body part 46 is suppressed, but the appropriate elastic deformation of the wall parts 52 and 53 becomes difficult. For example, when the mechanical strength of the duckbill valve 100 is reduced, the ease of the appropriate elastic deformation of the wall parts 52 and 53 is increased, but the suppression of the deformation of the main body part 46 becomes difficult.

In view of this, the inventors have devised a configuration in which, in comparison with the duckbill valve 200 of the related art, the main body part 46 is less easily deformed than the wall parts 52 and 53, and the wall parts 52 and 53 are thinner and more easily deformed than the main body part 46, and, the wall parts 52 and 53 become thinner and more deformable with decreasing distance to the slit 58. However, it was found that this configuration alone cannot easily and stably achieve both the suppression of deformation of the main body part 46 and the appropriate elastic deformation of the wall parts 52 and 53.

Therefore, the inventors have studied in detail the condition of the wall parts 52 and 53 and the main body part 46 under the use condition of the duckbill valve 100, i.e., the condition of the negative pressure applied to the duckbill valve 100, and as a result, the inventors have found conditions that achieve both the suppression of deformation of the main body part 46 and the appropriate elastic deformation of the wall parts 52 and 53.

The conditions will be described in detail below.

Optimal Conditions for Duckbill Valve

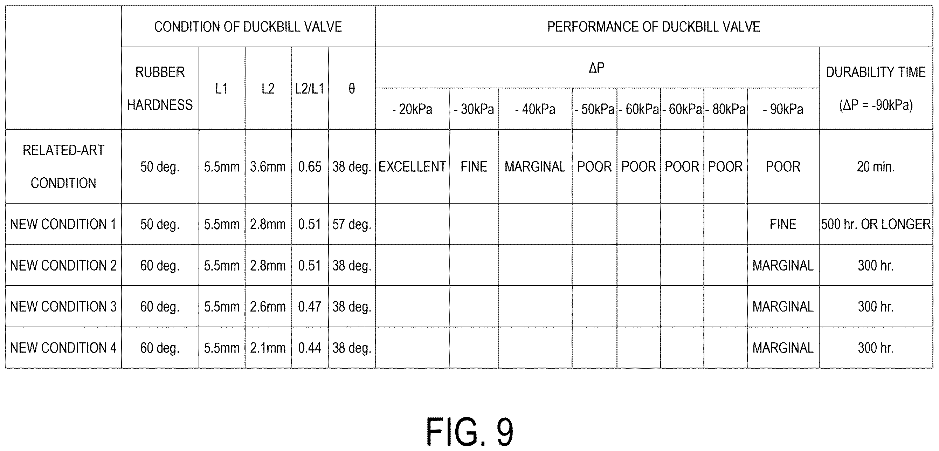

FIG. 9 is a table showing a relationship between conditions of the duckbill valve and the performance of the duckbill valve.

Next, with reference to FIG. 9, an optimum condition of the duckbill valve 100 that achieves suppression of deformation of the main body part 46 and appropriate elastic deformation of the wall parts 52 and 53 will be described.

In FIG. 9, the rubber hardness is a value determined in accordance with JIS K6253-2, and is the rubber hardness of the duckbill valve 100 (the main body part 46 and the wall parts 52 and 53). The rubber hardness is 50 degrees or 60 degrees. The reference sign L1 (outer diameter L1) is the dimension of the main body part 46, and is 5.5mm. The reference sign L2 (inner diameter L2) is the dimension of the first flow path 41, and is within the range from 2.1mm to 3.6mm. The reference sign L2/L1 (ratio value L2/L1) is a ratio value obtained by dividing the inner diameter L2 by the outer diameter L1 (the outer diameter of the first flow path formation part 40), and is within the range from 0.44 to 0.65. The reference sign $\theta$ (crossing angle $\theta$) is an angle between the virtual surface 52b of the first wall part 52 and the virtual surface 53b of the second wall part 53 (crossing angle $\theta$ between the first wall part 52 and the second wall part 53), and is 38 degrees or 57 degrees. The reference sign $\Delta P$ (pressure difference $\Delta P$) is a difference obtained by subtracting the pressure P2 of the downstream flow path FP2 from the pressure P1 of the second flow path 42 (pressure P1 of the flow paths 41 and 42), and is within the range from -20kPa to -90kPa.

As described above, the ink is a solution containing an acrylate-based monomer, a photopolymerization initiator, and a pigment, and has a higher viscosity than a solution that does not contain an acrylate-based monomer, a photopolymerization initiator, and a pigment, for example. Further, since the UV ink has a high viscosity and the flow path resistance is high, it is necessary to output a high pressure to the target object M (diaphragm pump) in order to cause flow of the UV ink.

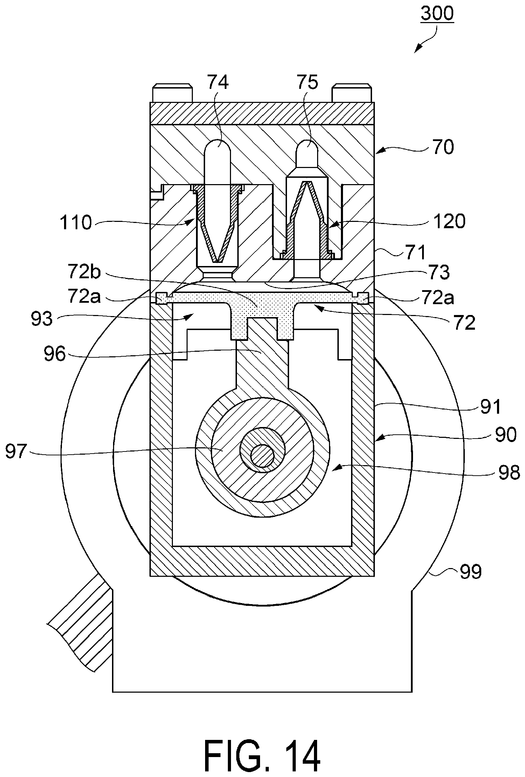

For example, when the ink is supplied to the downstream flow path of the target object M, the flow path resistance (e.g. 45kPa) of the downstream flow path of the target object M acts on each of a first duckbill valve 110 (see FIG. 14) and a second duckbill valve 120 (see FIG. 14), which will be described later. On the other hand, when the ink is caused to flow into the target object M (the upstream flow path FP1) from the upstream flow path of the target object M, an upstream flow path resistance (-25kPa) of the target object M acts on the first duckbill valve 110, and the upstream flow path resistance (-25kPa) of the target object M and a downstream flow path resistance (45kPa) of the target object M act on the second duckbill valve 120. In other words, at maximum, a difference between the positive pressure on the downstream flow path FP2 side (the downstream flow path resistance of the target object M) and the negative pressure of the flow paths 41 and 42 (the upstream flow path resistance of the target object M) acts on the duckbill valve 100. In this manner, when the ink is supplied to the downstream flow path of the target object M, a high negative pressure (pressure difference $\Delta P$) acts on the duckbill valve 100.

The condition of the negative pressure actually applied to the duckbill valve 100 is the pressure difference $\Delta P$ = -25kPa to -75kPa, and it is necessary that the duckbill valve 100 operate normally under this condition. Further, in order to stably ensure a state where the duckbill valve 100 operates normally under the condition of the negative pressure actually applied to the duckbill valve 100, it is necessary that the duckbill valve 100 operate normally when the condition is severer than the condition of the negative pressure actually applied to the duckbill valve 100, i.e., when the condition is the pressure difference $\Delta P$ = -20kPa to -90kPa in consideration of variable factors such as ink viscosity variation, environmental temperature variation, pipe path resistance variation.

That is, it is necessary that the duckbill valve 100 operate normally not only under the severest condition in actual use (pressure difference $\Delta P$ = -75kPa), but also under a condition (pressure difference $\Delta P$ = -90kPa) that is severer than the severest condition in actual use.

Accordingly, in this embodiment, the performance of the duckbill valve 100 in the case where the condition of the negative pressure applied to the flow paths 41 and 42 is the pressure difference $\Delta P$ = -20kPa to -90kPa is evaluated.

The durability time is the time until leakage occurs in the duckbill valve 100 when the duckbill valve 100 mounted to the target object M (the diaphragm pump 300 described below) is used under the condition where the highest negative pressure is applied to the duckbill valve 100 (pressure difference $\Delta P$ = -90kPa). Further, in actual use of the duckbill valve 100, it is necessary that the durability time of the duckbill valve 100 be 350 hours or longer, and preferably, the durability time of the duckbill valve 100 is 500 hours or longer.

In FIG. 9, the "excellent" indicates that the main body part 46 and the wall parts 52 and 53 are in the state illustrated in FIG. 4, in which no deformation of the main body part 46 and the wall parts 52 and 53 is caused under the negative pressure applied to the duckbill valve 100. The "fine" indicates that the main body part 46 and the wall parts 52 and 53 are in the state illustrated in FIG. 6, in which no deformation of the main body part 46 is caused under the negative pressure applied to the duckbill valve 100 while the wall parts 52 and 53 are elastically deformed without making contact with each other. The "marginal" is a state where no deformation of the main body part 46 is caused under the negative pressure applied to the duckbill valve 100 while the wall parts 52 and 53 elastically deform and make contact with each other.

The "poor" indicates that the main body part 46 and the wall parts 52 and 53 are in the state illustrated in FIG. 8, in which the main body part 46 is deformed under the negative pressure applied to the duckbill valve 100 and the wall parts 52 and 53 elastically deform and make contact with each other.

Note that the main body part 46 and the wall parts 52 and 53 were not evaluated in the blank portion where "excellent", "fine", "marginal", or "poor" is not indicated.

As illustrated in FIG. 9, under the related-art condition (rubber hardness = 50 degree, outer diameter L1 = 5.5mm, inner diameter L2 = 3.6mm, ratio value L2/L1 = 0.65, and crossing angle θ = 38 degrees), no deformation of the main body part 46 is caused when the pressure difference ΔP of the second flow path 42 is in the range from -20kPa to -40kPa. However, when the pressure difference ΔP is lower than -50kPa, the main body part 46 is deformed and crushed under the negative pressure applied to the duckbill valve 100, and defects such as crack (break) are more easily caused in the region supported by the flange part 45 in the main body part 46. Consequently, the durability time under the condition where the highest negative pressure is applied to the duckbill valve 100 (pressure difference ΔP = -90kPa) is approximately 20 minutes, which is very short. In other words, when the duckbill valve 100 mounted on the target object M is used for approximately 20 minutes, defects occur in the main body part 46, and the duckbill valve 100 becomes defective.

In addition, when the pressure difference ΔP is lower than -40kPa, the deformation of the wall parts 52 and 53 increases, and the wall parts 52 and 53 make contact with each other.

A new condition 1 (rubber hardness = 50 degree, outer diameter L1 = 5.5mm, inner diameter L2 = 2.8mm, ratio value L2/L1 = 0.51, and crossing angle θ = 57 degrees) differs from the related-art condition in the inner diameter L2, the ratio value L2/L1, and the crossing angle θ. Specifically, in the new condition 1, the main body part 46 is thicker and the crossing angle θ between the first wall part 52 and the second wall part 53 is gentler in comparison with the related-art condition.

With the new condition 1, the main body part 46 is not crushed and the main body part 46 is not deformed under the condition where the highest negative pressure is applied to the duckbill valve 100 (pressure difference ΔP = -90kPa). Thus, it is considered that, under the new condition 1, the main body part 46 is not crushed, and the main body part 46 is not deformed in the range of the pressure difference ΔP = -20kPa to -90kPa.

Under the new condition 1, the wall parts 52 and 53 do not make contact with each other although the wall parts 52 and 53 are deformed under the condition where the highest negative pressure is applied to the duckbill valve 100 (pressure difference ΔP = -90kPa). Accordingly, it is considered that, under the new condition 1, the wall parts 52 and 53 do not make contact with each other in the range of the pressure difference ΔP = -20kPa to -90kPa.

With the new condition 1, deformation of the main body part 46 is suppressed and the wall parts 52 and 53 do not make contact with each other under the condition where the highest negative pressure is applied to the duckbill valve 100 (pressure difference ΔP = -90kPa). Thus, the durability time is 500 hours or longer, and the durability time that allows for practical use of the duckbill valve 100 is satisfied.

A new condition 2 (rubber hardness = 60 degree, outer diameter L1 = 5.5mm, inner diameter L2 = 2.8mm, L2/L1 = 0.51, and crossing angle θ = 38 degrees) differs from the related-art condition in the rubber hardness and the ratio value L2/L1. Specifically, in the new condition 2, the rubber hardness is greater and the main body part 46 is thicker in comparison with the related-art condition while the crossing angle θ is the same as that of the related-art condition.

Further, in the new condition 2, the rubber hardness is greater and the crossing angle θ between the first wall part 52 and the second wall part 53 is steeper in comparison with the new condition 1.

With the new condition 2, the main body part 46 is not deformed while the wall parts 52 and 53 are deformed and the wall parts 52 and 53 make contact with each other under the condition where the highest negative pressure is applied to the duckbill valve 100 (pressure difference ΔP = -90kPa).

It is considered that, in the new condition 2, deformation of the main body part 46 is suppressed since the main body part 46 is thicker and the mechanical strength of the main body part 46 is greater in comparison with the related-art condition. In the new condition 2, however, the crossing angle θ between the first wall part 52 and the second wall part 53 is steeper in comparison with the new condition 1 and it is considered that the first wall part 52 and the second wall part 53 are easily deformed and the wall parts 52 and 53 make contact with each other due to the deformation of the wall parts 52 and 53.

As described above, when the first wall part 52 and the second wall part 53 make contact with each other, the contact and separation of the wall parts 52 and 53 are repeated with hard foreign matter (a polymer including a pigment) sandwiched between the first wall part 52 and the second wall part 53 and the wall parts 52 and 53 are scraped by the hard foreign matter. As a result, defects such as pinholes and cracks occur, and the ink leaks out from the portion where the defects have occurred, and consequently, the duckbill valve 100 becomes defective. As such, the durability time of the new condition 2 is approximately 300 hours, which is shorter than the durability time (500 hours or longer) of the new condition 1. That is, the new condition 2 does not satisfy the durability time (350 hours or longer) that allows for practical use.

FIG. 10 corresponds to FIG. 4, and is a cross-sectional view of the duckbill valve under the new condition 2. Note that FIG. 10 illustrates the duckbill valve under the new condition 1 with a two-dot chain line in addition to the duckbill valve under the new condition 2.

As illustrated in FIG. 10, in the new condition 1 and the new condition 2, the main body part 46 has the same shape, and therefore the position of the base end 51a is the same. In the new condition 2, the crossing angle θ between the first wall part 52 and the second wall part 53 is steeper and accordingly the lengths of the first wall part 52 and the second wall part 53 are longer in comparison with the new condition 1. Thus, the tip end part 57 of the new condition 2 indicated by the solid line in the drawing is located on the Z (+) direction side relative to the tip end part 57 of the new condition 1 indicated by the two-dot chain line in the drawing.

When negative pressure is applied to the duckbill valve 100, a force F in a direction in which the wall parts 52 and 53 are pressed acts as indicated by the arrow in the drawing. Although the force F that presses the wall parts 52 and 53 acts on the entire wall parts 52 and 53, the force F described here acts on the position indicated by the arrow in the drawing for the sake of concise description.

When the force F acts on the wall parts 52 and 53, the wall parts 52 and 53 operate to deform about the base end 51a as the fulcrum in the arrow direction in which the force F acts. In other words, with the base end 51a serving as the fulcrum and the position at which the force F acts serving as the action point, a moment that deforms the action point of the force F in the arrow direction acts on the wall parts 52 and 53 (the position where the force F acts in the wall parts 52 and 53). In the new condition 2, the distance between the fulcrum (base end 51a) and the action point (the position where the force F acts in the wall parts 52 and 53) is greater than that in the new condition 1. Consequently, under the new condition 2, a greater moment acts, and the wall parts 52 and 53 are more easily deformed in the direction in which the force F acts (the arrow direction) in comparison with the new condition 1.

In the new condition 2, the rubber hardness is greater and the wall parts 52 and 53 are less easily deformed in comparison with the new condition 1. However, it is considered that the influence of the crossing angle θ (the influence of the moment) is greater than the influence of the rubber hardness, and in new condition 2, with the pressure applied to the second flow path 42 due to the negative pressure, the wall parts 52 and 53 are largely deformed in the arrow direction such that the wall parts 52 and 53 make contact with each other.

It is considered that, under the new condition 1, the moment acting on the wall parts 52 and 53 are smaller than that of the new condition 2, and therefore, the wall parts 52 and 53 are less easily deformed, thus suppressing the deformation in the arrow direction in which the force F acts. Accordingly, in order to suppress deformation of the wall parts 52 and 53 so that the wall parts 52 and 53 do not make contact each other, a condition under which the moment is small, i.e., a condition where the crossing angle θ between the first wall part 52 and the second wall part 53 is gentle (new condition 1) is preferable.

On the other hand, the slit 58 is opened by deformation of the wall parts 52 and 53 (see FIG. 7). Therefore, in order to properly open and close the slit 58, it is preferable that the wall parts 52 and 53 be appropriately deformed. However, in comparison with the new condition 1, when the crossing angle θ between the first wall part 52 and the second wall part 53 is excessively gentle, the ease of the deformation of the wall parts 52 and 53 is further reduced, thus making it difficult to properly open and close the slit 58.

Therefore, in order to suppress deformation of the wall parts 52 and 53 so that the wall parts 52 and 53 do not make contact each other and in order to appropriately deform the wall parts 52 and 53 so that the slit 58 is appropriately opened, the crossing angle θ between the first wall part 52 and the second wall part 53 is preferably set to the condition (57 degrees) of the new condition 1. Further, through a simulation evaluation of the shape and an evaluation of the shape conducted by the inventors using an actual object, it was found that the crossing angle θ between the first wall part 52 and the second wall part 53 is preferably within a range from 50 degrees to 65 degrees in order to prevent the wall parts 52 and 53 from making contact with each other due to deformation of the wall parts 52 and 53.

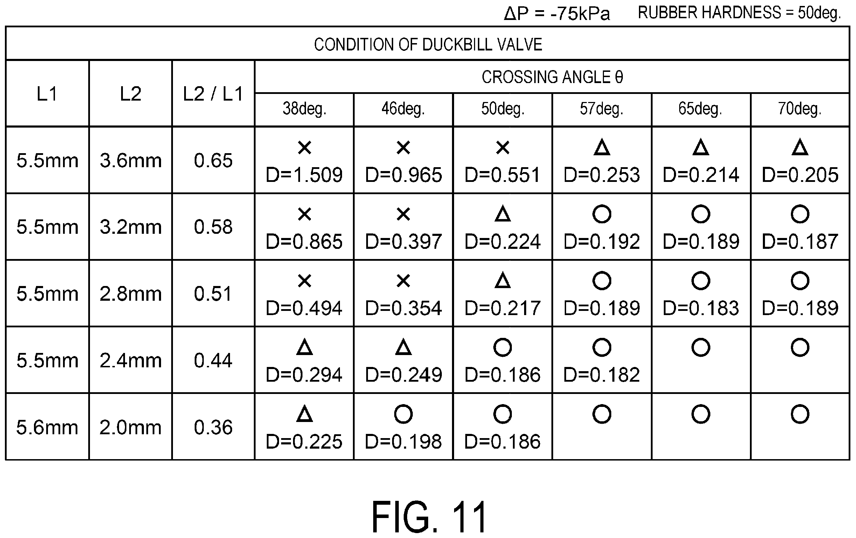

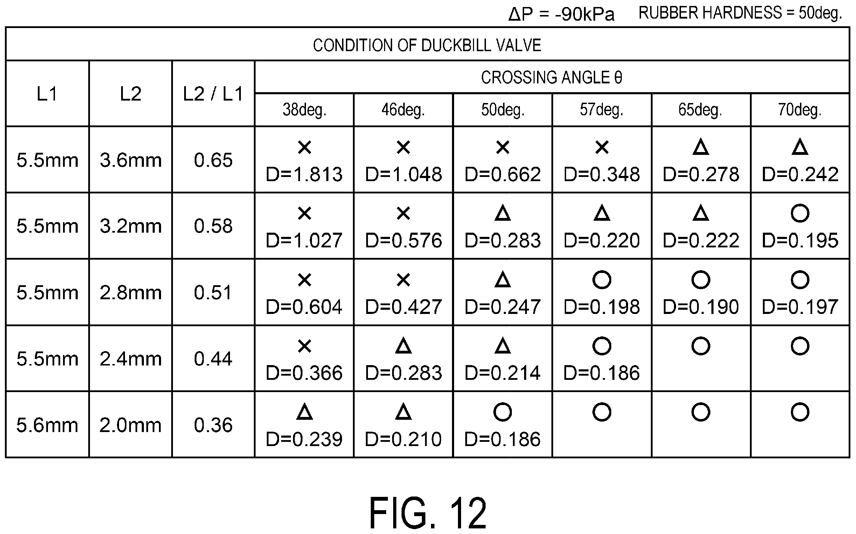

FIG. 11 is a table showing a relationship between conditions of the duckbill valve and the performance of the duckbill valve when the pressure difference ΔP is -75kPa in a more detailed simulation evaluation of the shape. Likewise, FIG. 12 is a table showing a relationship between conditions of the duckbill valve and the performance of the duckbill valve when the pressure difference ΔP is -90kPa in a more detailed simulation evaluation of the shape.

Note that FIGS. 11 and 12 provide lists of results of simulation evaluation using a simulator, DesignSpace version 13 available from Ansys Inc.

In FIGS. 11 and 12, the symbol D is the deformation amount of the wall parts 52 and 53 when a negative pressure of -75kPa or -90kPa is applied to the wall parts 52 and 53, and is calculated through a simulation evaluation using a simulator, DesignSpace version 13 available from Ansys Inc. The unit of the symbol D is mm.

In FIG. 6, the wall parts 52 and 53 that are deformed by application of negative pressure (pressure difference ΔP) are illustrated with a solid line, the wall parts 52 and 53 that are not deformed are illustrated with a two-dot chain line, a black circle is indicated at the center of the outer circumferential surface 52a of the first wall part 52, and a white circle is indicated at the center of each of the inner circumferential surfaces 52c and 53c of the wall parts 52 and 53 that are not deformed.

As illustrated in FIG. 6, the symbol D calculated through the simulation evaluation is the distance between the center of the outer circumferential surface 52a of the first wall part 52 that is deformed and the center of the outer circumferential surface 52a of the first wall part 52 that is not deformed, and is the deformation amount of the center of the outer circumferential surface 52a of the first wall part 52 when negative pressure is applied. In addition, the center of the outer circumferential surface 52a of the first wall part 52, which is indicated by the black circle in the drawing, is the portion that is most largely displaced when negative pressure is applied. Therefore, the symbol D calculated through the simulation evaluation can be referred to also as the displacement amount of the most largely displaced portion of the first wall part 52 when negative pressure is applied.

Further, the distance between the center of the inner circumferential surface 52c of the first wall part 52 that is deformed and the center of the inner circumferential surface 52c of the first wall part 52 that is not deformed is equal to the distance between the center of the outer circumferential surface 52a of the first wall part 52 that is deformed and the center of the outer circumferential surface 52a of the first wall part 52 that is not deformed. Accordingly, the deformation amount of the center of the inner circumferential surface 52c of the first wall part 52 when negative pressure is applied is substantially equal to the deformation amount of the center of the outer circumferential surface 52a of the first wall part 52 when negative pressure is applied, and therefore, the deformation amount of the center of the inner circumferential surface 52c of the first wall part 52 when negative pressure is applied can be determined by calculating the deformation amount of the center of the outer circumferential surface 52a of the first wall part 52 when negative pressure is applied.

That is, the symbol D in FIGS. 11 and 12 is the deformation amount of the center of the outer circumferential surface 52a of the first wall part 52 when negative pressure is applied, and is the deformation amount of the center of the inner circumferential surface 52c of the first wall part 52 when negative pressure is applied, and, is the displacement amount of the most largely displaced portion of the first wall part 52.

Further, the first wall part 52 and the second wall part 53 are surface-symmetric with respect to the XZ plane as the symmetry surface, and are made of the same material in the same thickness. Therefore, when negative pressure is applied, the first wall part 52 and the second wall part 53 deform in the same manner, and the deformation amount of the first wall part 52 when negative pressure is applied and the deformation amount of the second wall part 53 when negative pressure is applied are equal to each other.

Accordingly, the symbol D in FIGS. 11 and 12 is the deformation amount of the center of the outer circumferential surface 53a of the second wall part 53 when negative pressure is applied, and is the deformation amount of the center of the inner circumferential surface 53c of the second wall part 53 when negative pressure is applied, and, is the displacement amount of the portion of the second wall part 53 that is most largely displaced.

That is, the symbol D in FIGS. 11 and 12 is the deformation amount of the inner circumferential surface 52c of the first wall part 52 when negative pressure is applied and the deformation amount of the inner circumferential surface 53c of the second wall part 53 when negative pressure is applied, and is hereinafter referred to as a deformation amount D.

In the simulation evaluation using the simulator, DesignSpace version 13 available from Ansys Inc., it was assumed that when negative pressure is applied, the flange part 45 of the first flow path formation part 40 is fixed and not deformed while the main body part 46 of the first flow path formation part 40 and the second flow path formation part 50 are deformed. In addition, it was assumed that the outer circumferential surface and the inner circumferential surface of the main body part 46 of the first flow path formation part 40 and the outer circumferential surface and the inner circumferential surface of the second flow path formation part 50 are divided into 13 surfaces in total, and a force in the perpendicular direction is applied to each surface. In other words, it was assumed that the duckbill valve 100 is divided into 13 surfaces, and a force in the perpendicular direction is applied to each surface. Further, the rubber hardness of the duckbill valve 100 was set to 50 degrees.

The settings described above are a part of the conditions initially set in the simulation evaluation, and the settings were initially set in the simulation evaluation.

Further, in the simulation evaluation using the simulator, DesignSpace version 13 available from Ansys Inc., under the condition where the slit 58 is formed in the tip end part 57 of the second flow path formation part 50, the tip end part 57 was crushed by the negative pressure, and the shape was different from the evaluation result obtained with the actual object. On the other hand, under the condition where the slit 58 is not formed in the tip end part 57 of the second flow path formation part 50, the tip end part 57 was not crushed by the negative pressure, and the shape was the same as that of the evaluation result obtained with the actual object. Therefore, the simulation evaluation was performed under the condition where the slit 58 is not formed in the tip end part 57 of the second flow path formation part 50.

In FIGS. 11 and 12, "fine" and "marginal" indicate a state where the first wall part 52 and the second wall part 53 do not make contact with each other when negative pressure is applied, and "poor" indicates a state where the first wall part 52 and the second wall part 53 make contact with each other when negative pressure is applied.

In FIG. 6, H is the distance between the center of the inner circumferential surface 52c of the first wall part 52, which is indicated by a white circle in FIG. 6 and the center of the inner circumferential surface 53c of the second wall part 53, which is indicated by a white circle in FIG. 6, and is hereinafter referred to as a distance H between the wall parts 52 and 53 that are not deformed, or a distance H.

The distance H of the wall parts 52 and 53 that are not deformed is the distance between the most largely displaced portion of the first wall part 52 under the negative pressure and the most largely displaced portion of the second wall part 53 under the negative pressure.

At the most largely displaced portions of the wall parts 52 and 53, the distance H of the wall parts 52 and 53 that are not deformed is 0.6mm. Thus, when the deformation amount D of the first wall part 52 and the deformation amount D of the second wall part 53 are 0.3mm or greater, i.e., when the deformation amount D in FIGS. 11 and 12 is 0.3mm or greater at the most largely displaced portions of the wall parts 52 and 53, the first wall part 52 and the second wall part 53 make contact with each other when negative pressure is applied. Accordingly, in FIGS. 11 and 12, the case where the deformation amount D is 0.3mm or greater is indicated as "poor".

At the most largely displaced portions of the wall parts 52 and 53, the distance H of the wall parts 52 and 53 that are not deformed is 0.6mm, and therefore, when the deformation amount D in FIGS. 11 and 12 is smaller than 0.3mm, the first wall part 52 and the second wall part 53 do not make contact with each other when negative pressure is applied.

In practical cases, since dimensional tolerances are caused in portions of the duckbill valve 100 due to errors in manufacture of the duckbill valve 100, the distance H of the wall parts 52 and 53 that are not deformed varies at the most displaced portions of the wall parts 52 and 53, and the first wall part 52 and the second wall part 53 may make contact with each other even when the deformation amount D in FIGS. 11 and 12 is smaller than 0.3mm.

Specifically, in the case where the deformation amount D in FIGS. 11 and 12 is equal to or greater than 0.2mm and is smaller than 0.3mm, the first wall part 52 and the second wall part 53 may make contact with each other when the distance H varies due to dimensional tolerances of the portions of the duckbill valve 100. On the other hand, in the case where the deformation amount D in FIGS. 11 and 12 is smaller than 0.2mm, the first wall part 52 and the second wall part 53 do not always contact even when the distance H varies due to dimensional tolerances of the portions of the duckbill valve 100.

Accordingly, the case where the deformation amount D in FIGS. 11 and 12 is smaller than 0.2mm is indicated as "fine" since the first wall part 52 and the second wall part 53 do not always make contact with each other. However, in the case where the deformation amount D in FIGS. 11 and 12 is equal to or greater than 0.2mm and is smaller than 0.3mm, the first wall part 52 and the second wall part 53 may make contact with each other, and accordingly this case is indicated as "marginal".

In the case where negative pressure is applied in the case indicated as "poor" in FIGS. 11 and 12, when the first wall part 52 and the second wall part 53 make contact with each other, foreign matter is generated at the contact portion between the wall parts 52 and 53. When the wall parts 52 and 53 repeats contact and separation in the state with the generated foreign matter, the wall parts 52 and 53 are scraped by the foreign matter, and defects occur at the wall parts 52 and 53, thus reducing the durability time of the duckbill valve 100.

The durability time of the duckbill valve 100 varies depending on the degree of the contact between the first wall part 52 and the second wall part 53. The durability time of the duckbill valve 100 is short when the contact between the first wall part 52 and the second wall part 53 is strong, and the durability time of the duckbill valve 100 is long when the contact between the first wall part 52 and the second wall part 53 is weak.

In the durability evaluation using an actual object, the durability time of the duckbill valve 100 under the condition indicated as "poor" in FIGS. 11 and 12 was from 20 minutes to 300 hours.

In the case indicated as "fine" in FIGS. 11 and 12 where the first wall part 52 and the second wall part 53 do not make contact with each other even when the distance H varies due to dimensional tolerances of portions of the duckbill valve 100, the foreign matter resulting from contact between the first wall part 52 and the second wall part 53 is not generated, and the durability time of the duckbill valve 100 is long.

In the durability evaluation using an actual object, the durability time of the duckbill valve 100 under the condition indicated as "fine" in FIGS. 11 and 12 was 500 hours or longer.

The durability time of the duckbill valve 100 indicated as "marginal" in FIGS. 11 and 12 in which the first wall part 52 and the second wall part 53 may contact with each other when the distance H varies due to dimensional tolerances of portions of the duckbill valve 100 is shorter than that of the duckbill valve 100 of the condition indicated as "fine" in FIGS. 11 and 12.

Further, in the duckbill valve 100 of the condition indicated as "marginal" in FIGS. 11 and 12, the degree of the contact between the first wall part 52 and the second wall part 53 is lower, and the influence of the foreign matter generated by the contact between the wall parts 52 and 53 is smaller in comparison with the duckbill valve 100 of the condition indicated as "poor" in FIGS. 11 and 12. Thus, the durability time of the duckbill valve 100 of the condition indicated as "marginal" in FIGS. 11 and 12 is longer than that the duckbill valve 100 of the condition indicated as "poor" in FIGS. 11 and 12.

In the durability evaluation using an actual object, the durability time of the duckbill valve 100 of the condition indicated as "marginal" in FIGS. 11 and 12 was 350 hours or longer. Note that in the durability evaluation using an actual object, the durability time of the duckbill valve 100 of the condition indicated as "marginal" in FIGS. 11 and 12 was varied. The durability time was as short as approximately 350 hours when the first wall part 52 and the second wall part 53 made contact with each other, whereas the durability time was as long as 500 hours or longer when the first wall part 52 and the second wall part 53 did not make contact with each other.

In this manner, the duckbill valve 100 of the condition indicated as "marginal" in FIGS. 11 and 12 can achieve a durability time (350 hours or longer) that allows for practical use even when the first wall part 52 and the second wall part 53 make contact with each other under negative pressure. Further, in the case where the first wall part 52 and the second wall part 53 do not make contact with each other under negative pressure, the duckbill valve 100 of the condition indicated as "marginal" in FIGS. 11 and 12 can achieve the same durability time (500 hours or longer) as that of the duckbill valve 100 of the condition indicated as "fine" in FIGS. 11 and 12.

The duckbill valve in which the first wall part and the second wall part do not make contact with each other in the present application is a duckbill valve that provides increased durability by reducing the ease of contact between the first wall part and the second wall part under negative pressure. Therefore, the duckbill valve 100 that provides increased durability in which the first wall part 52 and the second wall part 53 do not easily make contact with each other corresponds to the duckbill valve in which the first wall part and the second wall part do not make contact with each other in the present application.

The duckbill valve 100 indicated as "fine" in FIGS. 11 and 12 in which the first wall part 52 and the second wall part 53 do not make contact with each other even when the distance H varies corresponds to the duckbill valve in which the first wall part and the second wall part do not make contact with each other in the present application.

Further, the duckbill valve 100 of the condition indicated as "marginal" in FIGS. 11 and 12 in which the first wall part 52 and the second wall part 53 may make contact with each other when the distance H varies corresponds to the duckbill valve in which the first wall part and the second wall part do not make contact with each other in the present application since the first wall part 52 and the second wall part 53 are less easily brought into contact with each other and the durability is increased in comparison with the duckbill valve 100 of the condition indicated as "poor" in FIGS. 11 and 12.

That is, the duckbill valve 100 of the condition indicated as "fine" in FIGS. 11 and 12 is an example of the duckbill valve in which the first wall part and the second wall part do not make contact with each other in the present application. In addition, the duckbill valve 100 of the condition indicated as "marginal" in FIGS. 11 and 12 is also an example of the duckbill valve in which the first wall part and the second wall part do not make contact with each other in the present application.

In FIGS. 11 and 12, the simulation evaluation is conducted and the deformation amount D is calculated with the duckbill valve 100 of conditions with the outer diameter L1 of 5.5mm to 5.6mm, the inner diameter L2 of 2.0mm to 3.6mm, the ratio value L2/L1 obtained by dividing the inner diameter L2 by the outer diameter L1 is 0. 36 to 0.65, and the crossing angle θ of 38 degrees to 70 degrees.

Further, in FIGS. 11 and 12, the duckbill valve 100 with the outer diameter L1 of 5.6mm, the inner diameter L2 of 2.0mm, the ratio value L2/L1 of 0.36, and the crossing angle θ of 57 degrees to 70 degrees, and the duckbill valve 100 with the outer diameter L1 of 5.5mm, the inner diameter L2 of 2.4mm, the ratio value L2/L1 of 0.44, and the crossing angle θ of 65 degrees to 70 degrees are not subjected to the simulation evaluation and calculation of the deformation amount D and are indicated as blank in FIGS. 11 and 12.

Specifically, some duckbill valves 100 of the condition with a smaller inner diameter L2 and the same outer diameter L1 and crossing angle θ in comparison with the duckbill valve 100 of the condition whose deformation amount D is calculated in FIGS. 11 and 12 are not subjected to the simulation evaluation and the calculation of the deformation amount D and are indicated as blank in FIGS. 11 and 12.

The duckbill valve 100 of the condition with a smaller inner diameter L2 and the same outer diameter L1 and crossing angle θ has a greater thickness of the wall parts 52 and 53 in comparison with the duckbill valve 100 of the condition with a larger inner diameter L2, and is therefore considered to have the same durability as the duckbill valve 100 of the condition with a larger inner diameter L2.

Therefore, the duckbill valve 100 indicated as blank in FIGS. 11 and 12 whose deformation amount D is not calculated is considered to have a durability equivalent to the durability of the duckbill valve 100 of the condition with the same the outer diameter L1 and the crossing angle θ and a larger inner diameter L2, and is indicated as "fine" in the blank in FIGS. 11 and 12.

For example, in FIGS. 11 and 12, the durability of the duckbill valve 100 with the outer diameter L1 of 5.5mm, the crossing angle θ of 65 degrees, and the inner diameter L2 of 2.4mm is considered to be equivalent to the durability of the duckbill valve 100 with the outer diameter L1 of 5.5mm, the crossing angle θ of 65 degrees, and the inner diameter L2 of 2.8mm, and accordingly the duckbill valve 100 with the outer diameter L1 of 5.5mm, the crossing angle θ of 65 degrees, and the inner diameter L2 of 2.4mm is indicated as "fine".

For example, in FIGS. 11 and 12, the durability of the duckbill valve 100 with the outer diameter L1 of 5.6mm, the crossing angle θ of 57 degrees, and the inner diameter L2 of 2.0mm is considered to be equivalent to the durability of the duckbill valve 100 with the outer diameter L1 of 5.5mm, the crossing angle θ of 57 degrees, and the inner diameter L2 of 2.4mm, and accordingly the duckbill valve 100 with the outer diameter L1 of 5.6mm, the crossing angle θ of 57 degrees, and the inner diameter L2 of 2.0mm is indicated as "fine".

As illustrated in FIG. 11, in the case where the pressure difference ΔP is a negative pressure of -75kPa, the duckbill valve 100 under the condition of "fine" or "marginal" corresponds to the duckbill valve in which the first wall part and the second wall part do not make contact with each other.

Specifically, in FIG. 11, in the case where the pressure difference ΔP is a negative pressure of -75kPa, the duckbill valve 100 of the condition (1) where the ratio value L2/L1 is 0.65 and the crossing angle θ is from 57 degrees to 70 degrees, the condition (2) where the ratio value L2/L1 is equal to or greater than 0.51 and is smaller than 0.65 and the crossing angle θ is from 50 degrees to 70 degrees, or the condition (3) where the ratio value L2/L1 is equal to or greater than 0.36 and is smaller than 0.51 and the crossing angle θ is from 38 degrees to 70 degrees corresponds to the duckbill valve in which the first wall part and the second wall part do not make contact with each other.

Thus, in FIG. 11, in the case where the pressure difference ΔP is a negative pressure of -75kPa, the duckbill valve 100 of the condition (1) where the ratio value L2/L1 is 0.65 and the crossing angle θ is from 57 degrees to 70 degrees, the condition (2) where the ratio value L2/L1 is equal to or greater than 0.51 and is smaller than 0.65 and the crossing angle θ is from 50 degrees to 70 degrees, or the condition (3) where the ratio value L2/L1 is equal to or greater than 0.36 and is smaller than 0.51 and the crossing angle θ is from 38 degrees to 70 degrees can achieve increased durability and a durability time of 350 hours or longer, which allows for practical use.

As illustrated in FIG. 12, in the case where the pressure difference ΔP is a negative pressure of -90kPa, the duckbill valve 100 under the condition of "fine" or "marginal" corresponds to the duckbill valve in which the first wall part and the second wall part do not make contact with each other in the present application.

Specifically, in FIG. 12, in the case where the pressure difference ΔP is a negative pressure of -90kPa, the duckbill valve 100 of the condition (1) where the ratio value L2/L1 is 0.65 and the crossing angle θ is from 65 degrees to 70 degrees, the condition (2) where the ratio value L2/L1 is equal to or greater than 0.51 and is smaller than 0.65 and the crossing angle θ is from 50 degrees to 70 degrees, the condition (3) where the ratio value L2/L1 is equal to or greater than 0.44 and is smaller than 0.51 and the crossing angle θ is from 46 degrees to 70 degrees, or the condition (4) where the ratio value L2/L1 is equal to or greater than 0.36 and is smaller than 0.44 and the crossing angle θ is from 38 degrees to 70 degrees corresponds to the duckbill valve in which the first wall part and the second wall part do not make contact with each other in the present application.

Thus, in FIG. 12, in the case where the pressure difference ΔP is a negative pressure of -90kPa, the duckbill valve 100 of the condition (1) where the ratio value L2/L1 is 0.65 and the crossing angle θ is from 65 degrees to 70 degrees, the condition (2) where the ratio value L2/L1 is equal to or greater than 0.51 and is smaller than 0.65 and the crossing angle θ is from 50 degrees to 70 degrees, the condition (3) where the ratio value L2/L1 is equal to or greater than 0.44 and is smaller than 0.51 and the crossing angle θ is from 46 degrees to 70 degrees, or the condition (4) where the ratio value L2/L1 is equal to or greater than 0.36 and is smaller than 0.44 and the crossing angle θ is from 38 degrees to 70 degrees can achieve increased durability and a durability time of 350 hours or longer, which allows for practical use.

Accordingly, in the case where the pressure difference ΔP is a negative pressure of -75kPa, the condition of the duckbill valve 100 that can achieve increased durability and a durability time of 350 hours or longer that allows for practical use in which the first wall part 52 and the second wall part 53 do not substantially make contact with each other is preferably the condition (1) where the ratio value L2/L1 is 0.65 and the crossing angle θ is from 57 degrees to 70 degrees, the condition (2) where the ratio value L2/L1 is equal to or greater than 0.51 and is smaller than 0.65 and the crossing angle θ is from 50 degrees to 70 degrees, or the condition (3) where the ratio value L2/L1 is equal to or greater than 0.36 and is smaller than 0.51 and the crossing angle θ is from 38 degrees to 70 degrees.

Further, in the case where the pressure difference ΔP is a negative pressure of -90kPa, the condition of the duckbill valve 100 that can achieve increased durability and a durability time of 350 hours or longer that allows for practical use in which the first wall part 52 and the second wall part 53 do not substantially make contact with each other is preferably the condition (1) where the ratio value L2/L1 is 0.65 and the crossing angle θ is from 65 degrees to 70 degrees, the condition (2) where the ratio value L2/L1 is equal to or greater than 0.51 and is smaller than 0.65 and the crossing angle θ is from 50 degrees to 70 degrees, the condition (3) where the ratio value L2/L1 is equal to or greater than 0.44 and is smaller than 0.51 and the crossing angle θ is from 46 degrees to 70 degrees, or the condition (4) where the ratio value L2/L1 is equal to or greater than 0.36 and is smaller than 0.44 and the crossing angle θ is from 38 degrees to 70 degrees.

Referring back to FIG. 9, a new condition 3 (rubber hardness = 60 degree, outer diameter L1 = 5.5mm, inner diameter L2 = 2.6mm, ratio value L2/L1 = 0.47, and crossing angle θ = 38 degrees) differs from the related-art condition in the rubber hardness and the ratio value L2/L1. Specifically, in the new condition 3, the rubber hardness is greater and the main body part 46 is thicker in comparison with the related-art condition. Further, in the new condition 3, the rubber hardness is greater, the main body part 46 is thicker, and the crossing angle θ between the first wall part 52 and the second wall part 53 is steeper in comparison with the new condition 1.

A new condition 4 (rubber hardness = 60 degree, outer diameter L1 = 5.5mm, inner diameter L2 = 2.1mm, ratio value L2/L1 = 0.44, and crossing angle θ = 38 degrees) differs from the related-art condition in the rubber hardness and the ratio value L2/L1. Specifically, in the new condition 4, the rubber hardness is greater and the main body part 46 is thicker in comparison with the related-art condition. Further, in the new condition 4, the rubber hardness is greater, the main body part 46 is thicker, and the crossing angle θ between the first wall part 52 and the second wall part 53 is steeper in comparison with the new condition 1.

In the new condition 3 and the new condition 4, the wall parts 52 and 53 deform and make contact with each other while the main body part 46 does not deform under the condition where the highest negative pressure is applied to the duckbill valve 100 (pressure difference ΔP = -90kPa). Since the wall parts 52 and 53 deform and make contact with each other, the durability of the duckbill valve 100 is reduced. Consequently, the durability time of each of the new condition 3 and the new condition 4 is approximately 300 hours, which is shorter than the durability time of the new condition 1 (500 hours or longer). In other words, the new condition 3 and the new condition 4 do not satisfy the durability time (350 hours or longer) that allows for practical use.

It is considered that, in the new condition 3 and the new condition 4, the rubber hardness is greater and the main body part 46 is thicker, and, the wall parts 52 and 53 are less easily deformed in comparison with the new condition 1; however, the influence of the crossing angle θ (the influence of the moment) is greater than the influence of the less deformable wall parts 52 and 53, and with the pressure applied to the second flow path 42 due to the negative pressure, the wall parts 52 and 53 are largely deformed in the arrow direction, thus bringing the wall parts 52 and 53 into contact with each other.

In this manner, the new condition 3 and the new condition 4 provide the same result as that of the new condition 2.

As described above, in order to reduce deformation of the wall parts 52 and 53 under the negative pressure applied to the duckbill valve 100 and to prevent the contact between the wall parts 52 and 53, the condition is preferably a condition where the moment that acts to deform the wall parts 52 and 53 is small (the condition of the new condition 1), i.e., a condition where the crossing angle θ between the first wall part 52 and the second wall part 53 is within a range from 50 degrees to 65 degrees.

In addition, under the condition where the highest negative pressure is applied to the duckbill valve 100 (pressure difference ΔP = -90kPa), deformation of the main body part 46 occurs under the related-art condition. In the new conditions 1 to 4, the ratio value L2/L1 is smaller and the main body part 46 is thicker in comparison with the related-art condition, and therefore the main body part 46 is not deformed under the condition where the highest negative pressure is applied to the duckbill valve 100 (pressure difference ΔP = -90kPa).

Accordingly, in order to prevent deformation of the main body part 46 under the negative pressure applied to the duckbill valve 100, the ratio values L2/L1 of the new conditions 1 to 4 are preferable. Specifically, it is preferable to set the condition such that the ratio value L2/L1 is smaller than the ratio value L2/L1 of the related-art condition, i.e., smaller than 0.65.

With the above-mentioned configuration, it is possible to achieve the duckbill valve 100 in which the main body part 46 is not deformed and the first wall part 52 and the second wall part 53 do not make contact with each other under the condition of the negative pressure (pressure difference ΔP = -20kPa to -90kPa) applied to the duckbill valve 100.

As a result, it is possible to achieve the duckbill valve 100 in which the first wall part 52 and the second wall part 53 do not make contact with each other under the condition of the negative pressure actually applied to the duckbill valve 100 (pressure difference ΔP = - 25kPa to -75kPa), i.e., the severest condition in actual use (pressure difference ΔP = -75kPa).

Further, it is possible to achieve the duckbill valve 100 in which the first wall part 52 and the second wall part 53 do not make contact with each other under a condition (pressure difference ΔP = -90kPa) that is severer than the severest condition in actual use (pressure difference ΔP = -75kPa).

Thus, it is possible to achieve the duckbill valve 100 that stably operates for a long time with high reliability and provides excellent durability with a durability time of 500 hours or longer in the case where the condition of the negative pressure applied to the duckbill valve 100 is the pressure difference ΔP = -20kPa to -90kPa. In other words, it is possible to achieve the duckbill valve 100 that stably and normally operates under the condition of the negative pressure actually applied to the duckbill valve 100 (pressure difference ΔP = -25kPa to -75kPa), i.e., the duckbill valve 100 with high reliability that provides excellent durability even under a high liquid pressure.

Embodiment 2

Diagram Pump

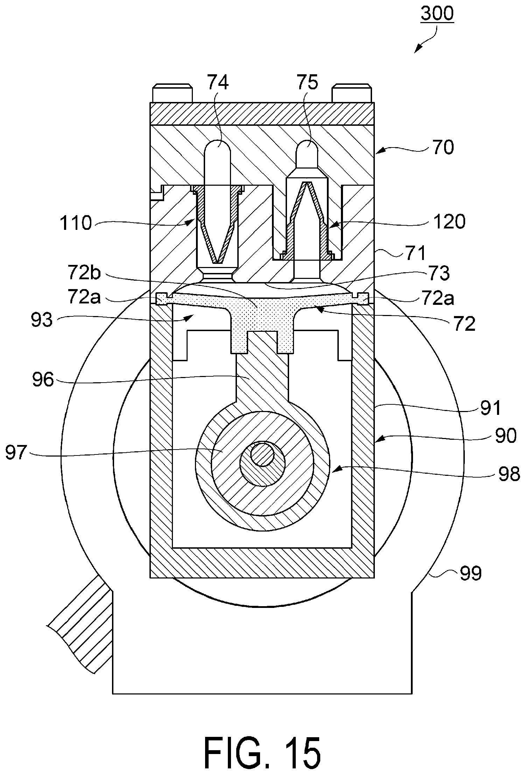

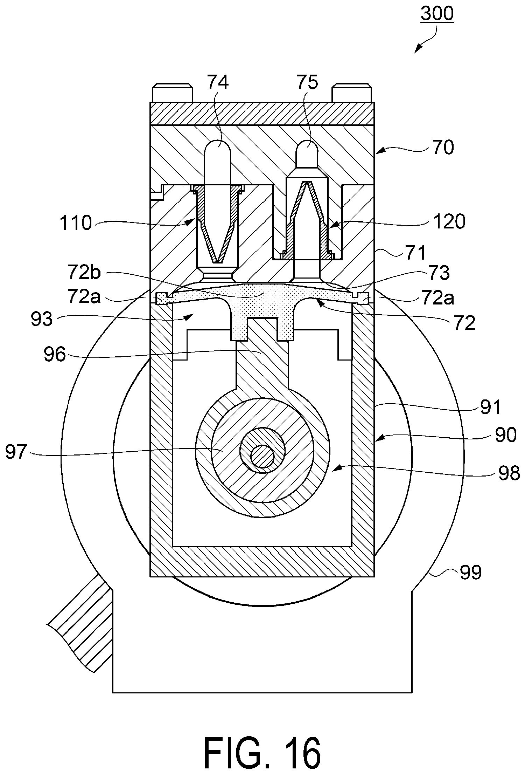

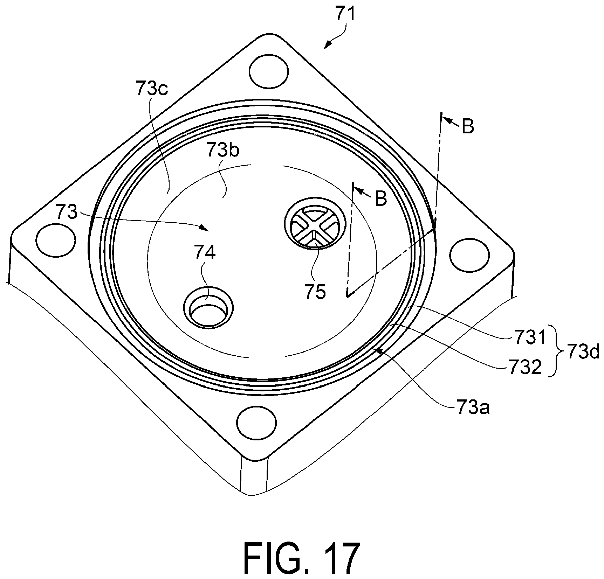

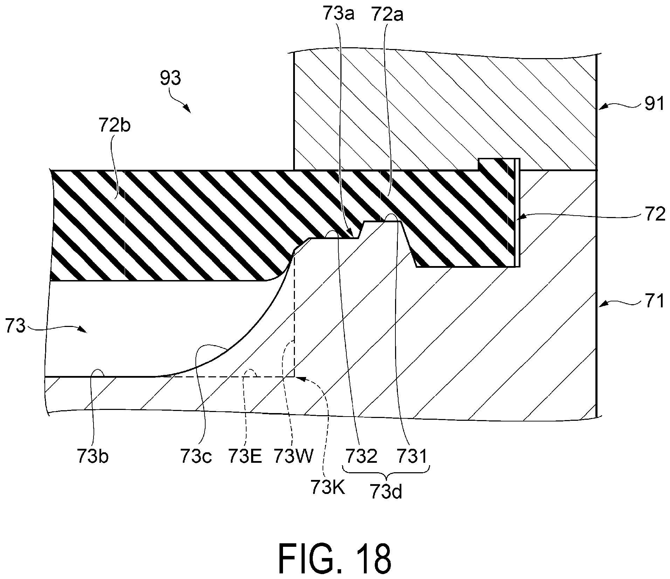

FIG. 13 is a perspective view illustrating an appearance of a diaphragm pump according to Embodiment 2. FIGS. 14 to 16 are cross-sectional views illustrating a state transition of a schematic configuration of the diaphragm pump. FIG. 14 illustrates a neutral state of the diaphragm pump, FIG. 15 illustrates an intake state of the diaphragm pump, and FIG. 16 illustrates a discharging state of the diaphragm pump. FIG. 17 is a perspective view of a first housing of the diaphragm pump as viewed from a fluid intake discharge chamber side, and FIG. 18 is a B-B cross-sectional view of FIG. 17.

A diaphragm pump 300 according to this embodiment will be described below with reference to FIGS. 13 to 18.

The diaphragm pump 300 according to this embodiment includes the duckbill valve 100 according to Embodiment 1.

As illustrated in FIG. 13, the diaphragm pump 300 according to this embodiment includes a diaphragm pump part 70 including a first housing 71, a second housing 91 including a drive mechanism part 90 (see FIG. 14) for deforming a diaphragm 72 of the diaphragm pump part 70 (described later), and a motor 99 that is a drive source of the drive mechanism part 90.

In the diaphragm pump part 70, an inlet flow path 74 and an outlet flow path 75 connected therein are pulled out so as to protrude from the first housing 71 such that each of the flow paths is connectable to an external fluid pipe.

As illustrated in FIG. 14, the diaphragm pump 300 includes the diaphragm 72 having elasticity, and a fluid intake discharge chamber 73 defined by elastic deformation of the diaphragm 72 on the first housing 71 side and configured to change the capacity. The fluid intake discharge chamber 73 of the diaphragm pump part 70 includes the inlet flow path 74 connected through the first duckbill valve 110 that allows only fluid flowing in the direction toward the fluid intake discharge chamber 73, and the outlet flow path 75 connected through the second duckbill valve 120 that allows only fluid flowing in the outward direction from the fluid intake discharge chamber 73.

In this embodiment, the duckbill valve 100 according to Embodiment 1 is used for both the first duckbill valve 110 and the second duckbill valve 120.

The second housing 91 of the drive mechanism part 90 includes a diaphragm deformation chamber 93, which is a space that allows displacement of the diaphragm 72 on the opposite side of the fluid intake discharge chamber 73 with the diaphragm 72 sandwiched therebetween. Below the diaphragm deformation chamber 93, an eccentric cam mechanism 98 using an eccentric cam 97 is provided as a drive mechanism that performs driving for deforming the diaphragm 72. One end of a rod 96 is connected to the eccentric cam 97 of the eccentric cam mechanism 98, and the other end of the rod 96 is connected to the diaphragm deformation chamber 93 side of the diaphragm 72.

With this configuration, when the motor 99 of the drive mechanism part 90 is controlled and driven such that the diaphragm 72 is deformed in a predetermined manner by the eccentric cam mechanism 98, the pressure in the fluid intake discharge chamber 73 can be periodically increased or decreased, and the capacity of the fluid intake discharge chamber 73 can be changed to an increased or decreased capacity.

FIG. 14 illustrates a state where the diaphragm 72 is set in a neutral position. The neutral position of the diaphragm 72 is a position in which the capacity of the fluid intake discharge chamber 73 whose capacity changes in accordance with the change in the position and/or shape of the diaphragm 72 is set to an intermediate value between the maximum value and the minimum value.

In a down process in which the diaphragm 72 moves down to the diaphragm deformation chamber 93 side as illustrated in FIG. 15, the pressure in the chamber formed by the fluid intake discharge chamber 73 and the diaphragm 72 is lowered (reduced), and in an up process in which the diaphragm 72 moves up to the fluid intake discharge chamber 73 side as illustrated in FIG. 16, the pressure in the chamber formed by the fluid intake discharge chamber 73 and the diaphragm 72 is elevated (increased). The down process and the up process are performed through an appropriate driving with the eccentric cam mechanism 98 performed by controlling the motor 99 of the drive mechanism part 90 from the setting state (neutral state) of the diaphragm pump 300 illustrated in FIG. 14. As a result, in a pressure elevation process of the fluid intake discharge chamber 73, the diaphragm 72 deforms toward the fluid intake discharge chamber 73, and the volume of the fluid intake discharge chamber 73 is reduced (see FIG. 16). At this time, the discharge of the fluid through the inlet flow path 74 is prevented by the first duckbill valve 110 and the fluid in the fluid intake discharge chamber 73 is discharged from the outlet flow path 75 through the second duckbill valve 120. On the other hand, in a pressure lowering process of the fluid intake discharge chamber 73, the diaphragm 72 deforms toward the diaphragm deformation chamber 93 side, and the volume of the fluid intake discharge chamber 73 is increased (see FIG. 15). At this time, the intake of the fluid through the outlet flow path 75 is prevented by the second duckbill valve 120, and the fluid is taken into the fluid intake discharge chamber 73 from the inlet flow path 74 through the first duckbill valve 110 (see FIGS. 15 and 16). By repeating such processes, the fluid is delivered from the inlet flow path 74 to the outlet flow path 75.

As illustrated in FIGS. 14 to 16, in the diaphragm pump 300 according to this embodiment, the diaphragm 72 is fixed and sandwiched between the first housing 71 that constitutes the fluid intake discharge chamber 73 and the second housing 91 that constitutes the drive mechanism part 90, and the diaphragm 72 includes a perimeter part 72a sandwiched between the first housing 71 and the second housing 91 and a deformation part 72b disposed on the center side relative to the perimeter part 72a and configured to deform in accordance with increase or decrease of the pressure in the fluid intake discharge chamber 73, and, the first housing 71 is formed such that the first housing 71 and the deformation part 72b do not make contact with each other. In the first housing 71 of this embodiment, an arcuate recess is formed in such a manner as to be separated away from the diaphragm 72 from the peripheral side toward the center.

With this configuration, in the case where, particularly, UV ink is used as the fluid that is pumped by the diaphragm pump 300, no contact, separation or sliding between the fluid intake discharge chamber 73 of the first housing 71 and the diaphragm 72 deformed by pumping of the UV ink is caused. As a result, the generation of polymer foreign matter of the UV ink can be suppressed and stable feeding can be performed.

As illustrated in FIGS. 17 and 18, the first housing 71 includes an opposing face 73b facing the diaphragm 72, an annular protrusion part 73a formed contiguously with the opposing surface 73b at a position facing the perimeter part 72a of the diaphragm 72, and a side surface (contiguous surface) connecting between the opposing surface 73b and an end surface 73d of the annular protrusion part 73a that makes contact with the perimeter part 72a of the diaphragm 72, i.e., a side surface 73c connecting between the end surface 73d of the annular protrusion part 73a and the opposing surface 73b. The side surface 73c has an inclination. Specifically, as illustrated in FIGS. 17 and 18, the side surface 73c, which is contiguous with the opposing surface 73b of the first housing 71 facing the diaphragm 72 and with the end surface 73d of the annular protrusion part 73a of the first housing 71 that makes contact with the perimeter part 72a of the diaphragm 72, has an inclination such that the angle between the opposing surface 73b and the side surface 73c is greater than 90 degrees. In addition, the side surface 73c may be formed as a curved surface.

As indicated by the dashed line in FIG. 18, in the case where a virtual corner 73K (with an angle of 90 degrees or smaller) is formed with a virtual opposing surface 73E and a virtual side surface 73W that is contiguous with the opposing surface 73E, air bubbles may be easily built up in the virtual corner 73K. In contrast, with the side surface 73c having an inclination as in the first housing 71 of this embodiment, the air bubbles are less easily built up, and thus the fluid can be stably pumped.

Further, in this embodiment, the end surface 73d of the annular protrusion part 73a that is formed at the periphery of the first housing 71 includes a first end surface 731 formed on the peripheral side of the first housing 71, and a second end surface 732 formed on the inside thereof and having a lower protrusion height than the first end surface 731. In other words, the annular protrusion part 73a has a stepped shape including the first end surface 731 and the second end surface 732 that is lower than the first end surface 731.

With this configuration, the first end surface 731 of the annular protrusion part 73a can suppress the contact of the deformation part 72b of the diaphragm 72 with the opposing surface 73b of the first housing 71 due to vertical movement of the diaphragm 72, and this effect can be further increased by the second end surface 732 of the second end surface 732.

As described above, the diaphragm pump 300 according to this embodiment uses the duckbill valve 100 with high reliability that provides excellent durability even at high liquid pressure.

Further, in the first housing 71, no contact, separation or sliding between the fluid intake discharge chamber 73 of the first housing 71 and the diaphragm 72 deformed by the pumping of the UV ink is caused, and thus the generation of polymer foreign matter (a polymer including a pigment) of the UV ink is suppressed.

Further, the side surface 73c that is contiguous with the opposing surface 73b of the first housing 71 facing the diaphragm 72 and with the end surface 73d of the annular protrusion part 73a of the first housing 71 that makes contact with the perimeter part 72a of the diaphragm 72 has an inclination such that an angle between the opposing surface 73b and the side surface 73c is greater than 90 degrees (R is formed), and thus air bubbles are not easily built up in the fluid intake discharge chamber 73.

Accordingly, the diaphragm pump 300 according to this embodiment provides high reliability and can achieve stable pumping of fluid.

Embodiment 3

Printing Apparatus

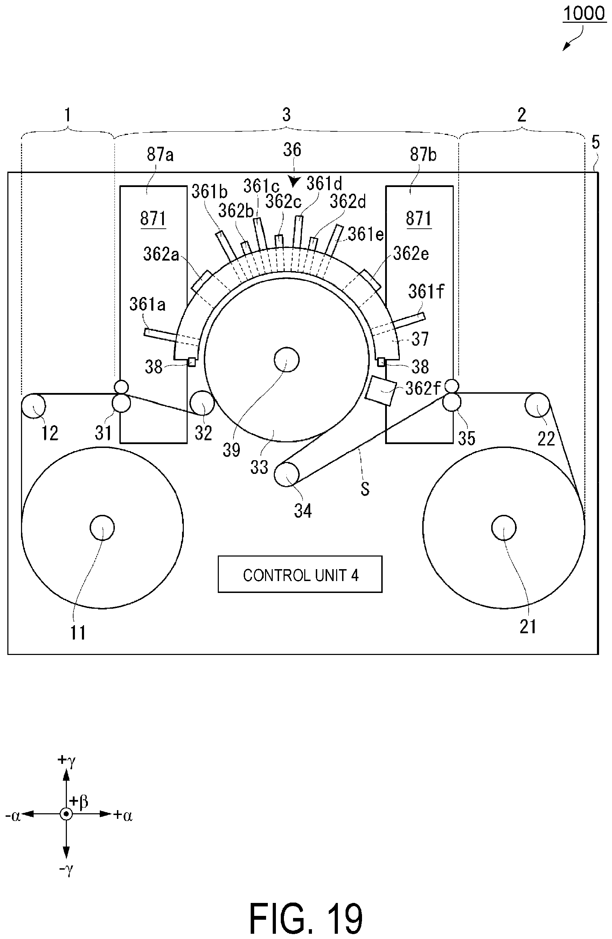

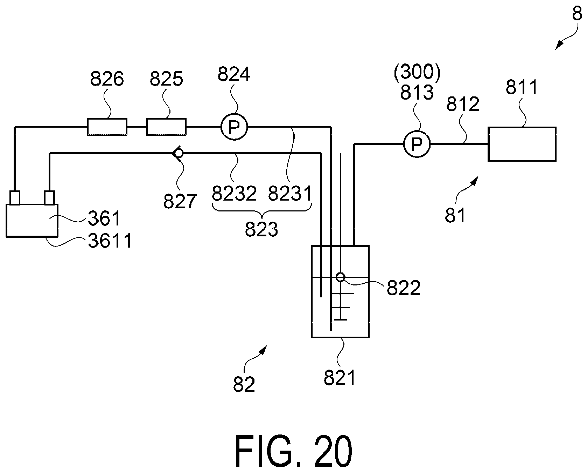

FIG. 19 is a schematic view of a configuration of a printing apparatus according to Embodiment 3. FIG. 20 is a schematic view of a configuration of an ink supply system.

The printing apparatus 1000 according to this embodiment will be described below with reference to FIGS. 19 and 20. Note that in FIG. 19, an $\alpha\beta\gamma$ rectangular coordinate system is provided in order to clarify the arrangement relationship of the parts of the apparatus. The $\alpha$ direction ($+\alpha$ direction) is the direction from a feeding unit 1 toward a winding unit 2, and is the width direction of the printing apparatus 1000. The $\gamma$ direction ($+\gamma$ direction) is the height direction of the printing apparatus 1000. The $\beta$ direction ($+\beta$ direction) is the depth direction of the drawing, and is the depth direction of the printing apparatus 1000.

The printing apparatus 1000 according to this embodiment includes the duckbill valve 100 according to Embodiment 1 and the diaphragm pump 300 according to Embodiment 2 described above, and performs printing by discharging UV ink as fluid onto a set printing medium S. The printing medium S is band-shaped continuous paper. Note that the material of the printing medium S is not particularly limited, and various materials such as paper and film are used.

Note that since the UV ink is cured in a short time through UV light irradiation, the printing apparatus 1000 that performs printing on the printing medium S by discharging the UV ink has high productivity.

As illustrated in FIG. 19, the printing apparatus 1000 includes the feeding unit 1, the winding unit 2, a printing unit 3, a control unit 4, and an outer housing 5. In addition, the printing apparatus 1000 includes an ink supply system 8 (see FIG. 20).

The feeding unit 1 and the winding unit 2 send the printing medium S in a roll-to-roll manner with the printing unit 3 sandwiched therebetween. The feeding unit 1 includes a feeding shaft 11 and a feeding-side guide roller 12.

The printing medium S wound in a roll shape is set on the feeding shaft 11. The printing medium S fed from the feeding shaft 11 is sent to the printing unit 3 through the feeding-side guide roller 12. The winding unit 2 includes a winding shaft 21 and a winding-side guide roller 22. The printing medium S sent from the printing unit 3 through the winding-side guide roller 22 is wound on the winding shaft 21.

The printing unit 3 performs printing an image on the printing medium S. The printing unit 3 includes an upstream feed roller pair 31, an upstream guide roller 32, a rotary drum 33, a downstream guide roller 34, a downstream feed roller pair 35, a process unit 36, a carriage 37, and a guide rail 38.

The upstream feed roller pair 31 sends, toward the upstream guide roller 32, the printing medium S fed from the feeding unit 1. The upstream guide roller 32 guides the sending of the printing medium S such that the printing medium S is folded between the upstream feed roller pair 31 and the rotary drum 33. The rotary drum 33 is a cylindrical drum that is rotatable about a rotation shaft 39 extending in the β direction. When the printing medium S is fed along the circumferential surface of the rotary drum 33, the rotary drum 33 is driven into rotation by the frictional force between the circumferential surface and the printing medium S. The rotary drum 33 functions as a platen for an ink discharge head 361 as a fluid discharge head (described later). The downstream guide roller 34 guides the sending of the printing medium S such that the printing medium S is folded between the rotary drum 33 and the downstream feed roller pair 35. The downstream feed roller pair 35 sends, toward the winding unit 2, the printing medium S sent from the downstream guide roller 34.

The process unit 36 includes six ink discharge heads, 361a to 361f, and six UV illuminators, 362a to 362f. Naturally, the above-mentioned numbers are merely examples, and the same applies to the numbers described later.

Note that, the six ink discharge heads 361a to 361f that are not required to be distinguished are each referred to as "ink discharge head 361". Likewise, the six UV illuminators 362a to 362f that are not required to be distinguished are each referred to as "UV illuminator 362".

The carriage 37 includes the ink discharge heads 361a to 361f and the UV illuminators 362a to 362e of the process unit 36. Note that the UV irradiator 362f is not mounted in the carriage 37. The carriage 37 and the process unit 36 mounted thereto can move back and forth in the β direction as described later. The guide rail 38 is provided at each of the end portions in the α direction of the carriage 37. The guide rail 38 slidably supports the carriage 37 in the β direction.

The six ink discharge heads 361 are disposed along the feeding path of the printing medium S in such a manner as to face the circumferential surface of the rotary drum 33. The six ink discharge heads 361 correspond to UV ink of six colors of white, yellow, cyan, magenta, black, and clear (transparent) in this order from the upstream side of the sending direction of the printing medium S, for example. Each ink discharge head 361 discharges the UV ink in an ink-jet manner. The ink discharge head 361 discharges the UV ink onto the printing medium S supported on the circumferential surface of the rotary drum 33. In this manner, a color image is formed on the printing medium S. Note that the back pressure of the UV ink inside the ink discharge head 361 (hereinafter referred to as the "head back pressure") is preferably maintained in a range, for example, from -3kPa to -0.4kPa such that a good meniscus is formed.

In the case where an image is printed on the transparent printing medium S, the ink discharge head 361a that discharges the white UV ink is used to form a white background on the printing medium S. The ink discharge head 361b that discharges the yellow UV ink, the ink discharge head 361c that discharges the cyan UV ink, the ink discharge head 361d that discharges the magenta UV ink, and the ink discharge head 361e that discharges the black UV ink are used to form a color image on a white background formed by the white UV ink, or directly on the printing medium S. The ink discharge head 361f that discharges the clear UV ink is used to cover the color image with the clear UV ink.

The six UV illuminators 362 include UV illuminators for temporary curing and UV illuminators for main curing. The UV illuminators 362b to 362d are the UV illuminators for temporary curing. The UV irradiator 362b is provided between the ink discharge head 361b and the ink discharge head 361c, the UV irradiator 362c is provided between the ink discharge head 361c and the ink discharge head 361d, and the UV irradiator 362d is provided between the ink discharge head 361d and the ink discharge head 361e. The UV irradiators 362b to 362d for temporary curing emits, to the printing medium S onto which the UV ink has been discharged, ultraviolet rays in an integrated amount that slows the wet spreading of the UV ink. In this manner, color mixture due to mixture of the UV inks discharged from the ink discharge heads 361b to 361e is reduced.

On the other hand, the UV irradiators 362a, 362e and 362f are the UV irradiators for main curing. The UV irradiator 362a is provided between the ink discharge head 361a and the ink discharge head 361b, the UV irradiator 362e is provided between the ink discharge head 361e and the ink discharge head 361f, and the UV irradiator 362f is provided downstream of the ink discharge head 361f in the sending direction. The UV irradiator 362 for main curing emits, to the printing medium S onto which the UV ink has been discharged, ultraviolet rays in an integrated amount that stops the wet spreading of the UV ink. In this manner, the UV ink applied on the printing medium S is completely cured and fixed on the printing medium S.

Note that the carriage 37 is provided with two ink supply units, 87a and 87b, arranged in the α direction. The two ink supply units 87a and 87b that are not required to be distinguished are each referred to as "ink supply unit 87". Each ink supply unit 87 includes three ink supply parts 82 (see FIG. 20) and a container part 871 containing the same. The three ink supply parts 82 provided on the ink supply unit 87a on the -α side supply UV ink of respective colors to the ink discharge heads 361a to 361c. The three ink supply units 82 provided on the ink supply unit 87b on the +α side supply UV ink of respective colors to the ink discharge heads 361d to 361f. Note that the ink supply unit 82 constitutes the ink supply system 8 (see FIG. 20) described later.

The control unit 4 includes a central processing unit (CPU) and various memories.

The control unit 4 controls each part of the printing apparatus 1000. The outer housing 5 houses the feeding unit 1, the winding unit 2, the printing unit 3, the control unit 4, and the ink supply system 8.

Next, the ink supply system 8 will be described with reference to FIG. 20.

As described above, the printing apparatus 1000 includes the six ink discharge heads 361 and the six ink supply units 82, and the six ink discharge heads 361 and ink supply units 82 have the same configuration, and as such, one ink discharge head 361 and one ink supply unit 82 are illustrated in FIG. 20.

The ink supply system 8 includes an ink replenishment unit 81 and the ink supply unit 82.

In the ink supply system 8, an ink supply flow path (fluid supply flow path) for supplying the UV ink from a cartridge mounting part 811 serving as a fluid reservoir to the ink discharge head 361 includes a replenishment flow path 812 connecting between a sub-tank 821 and the cartridge mounting part 811 of the ink replenishment unit 81, and a circulation forward path 8231 of the ink supply unit 82 connecting between the sub-tank 821 and the ink discharge head 361.

The ink replenishment unit 81, which is a part of the ink supply flow path, replenishes the UV ink to the ink supply unit 82. The ink replenishment unit 81 includes the cartridge mounting part 811, the replenishment flow path 812, and a replenishment pump 813. For the replenishment pump 813, the above-described duckbill valve 100 (the first duckbill valve 110 and the second duckbill valve 120) and the diaphragm pump 300 including the same are used.

An ink cartridge (not illustrated) is mounted on the cartridge mounting part 811. The UV ink is supplied to the ink discharge head 361 from an ink cartridge mounted to the cartridge mounting part 811 through the sub-tank 821 of the ink supply part 82. The cartridge mounting part 811 is connected to the sub-tank 821 through the replenishment flow path 812. The replenishment pump 813 is provided in the replenishment flow path 812. The replenishment pump 813 sends the UV ink contained in the ink cartridge to the sub-tank 821 through the replenishment flow path 812.

The ink supply unit 82 supplies the ink discharge head 361 with the UV ink replenished from the ink replenishment unit 81. The ink supply unit 82 includes the sub-tank 821, a liquid level sensor 822, an ink circulation flow path 823, a circulation pump 824, a heat exchanger 825, a degassing module 826, and a check valve 827.

The sub-tank 821 temporarily stores the UV ink that has been sent from the ink cartridge. The sub-tank 821 is of an open type.

The liquid level sensor 822 detects the liquid level of the UV ink in the sub-tank 821. The control unit 4 controls the replenishment pump 813 on the basis of the detection result of the liquid level sensor 822. In this manner, the liquid level in the sub-tank 821 is maintained within a predetermined range. Specifically, the head difference between the liquid surface of the sub-tank 821 and a nozzle surface 3611 of the ink discharge head 361 is maintained within a predetermined range (e.g., approximately 200mm). In the printing operation, pressure loss of the UV ink is caused by the circulation of the UV ink within the ink circulation flow path 823, and thus the head back pressure is maintained at, for example, -1kPa, and as a result, a good meniscus is formed in the nozzle of the ink discharge head 361.

The ink circulation flow path 823 is a flow path of UV ink that flows from the sub-tank 821 to the sub-tank 821 via the ink discharge head 361. The ink circulation flow path 823 includes the circulation forward path 8231 and a circulation return path 8232.

The UV ink supplied from the sub-tank 821 to the ink discharge head 361 flows in the circulation forward path 8231. The upstream end of the circulation forward path 8231 is inserted in the sub-tank 821. The downstream end of the circulation forward path 8231 is connected to the ink discharge head 361. In the circulation forward path 8231, the circulation pump 824, the heat exchanger 825, and the degassing module 826 are provided in this order from the upstream side.

In the circulation return path 8232, the UV ink that flows back to the sub-tank 821 from the ink discharge head 361 flows. Specifically, of the UV ink that has been supplied to the ink discharge head 361 from the sub-tank 821 through the circulation forward path 8231, the UV ink that has not been discharged from the ink discharge head 361 returns to the sub-tank 821 through the circulation return path 8232. The upstream end of the circulation return path 8232 is connected to the ink discharge head 361. The downstream end of the circulation return path 8232 is inserted in the sub-tank 821.

The circulation pump 824 sends the UV ink stored in the sub-tank 821 toward the ink discharge head 361. The rotational speed of the circulation pump 824 is variable between a normal speed, which is the rotational speed during the printing operation, and a high speed, which is the rotational speed during the discharge cleaning.

Note that, as the circulation pump 824, a gear pump may be suitably used since pulsation can be suppressed and time-dependent flow variation is small.

The heat exchanger 825 heats UV ink flowing through the ink circulation flow path 823 to a predetermined temperature (of, e.g., from 35°C to 40°C) by performing heat exchange between hot water supplied from a hot water tank (not illustrated) and the UV ink flowing through the ink circulation flow path 823. The predetermined temperature is a temperature at which the UV ink supplied to the ink discharge head 361 has a viscosity suitable for discharging from the ink discharge head 361. At actuation of the printing apparatus 1000, the printing apparatus 1000 starts the printing operation after heating, to a predetermined temperature, the UV ink having a temperature lower than the predetermined temperature by the heat exchanger 825.

The degassing module 826 deaerates the UV ink flowing through the ink circulation flow path 823. In this manner, supply of the UV ink containing air bubbles to the ink discharge head 361 is prevented. As the degassing module 826, a module provided with a plurality of hollow fiber membranes may be used, for example.

The check valve 827 is provided in the circulation return path 8232. The check valve 827 reduces flow of the UV ink from the sub-tank 821 to the ink discharge head 361 in the circulation return path 8232.

As described above, the printing apparatus 1000 according to this embodiment includes the ink discharge head 361 that discharges UV ink, the sub-tank 821 that stores the UV ink that is supplied to the ink discharge head 361, the ink circulation flow path 823 including the circulation forward path 8231 and the circulation return path 8232, and the circulation pump 824 that circulates the UV ink in the ink circulation flow path 823.

Further, the printing apparatus 1000 according to this embodiment that performs printing using UV ink as fluid uses the diaphragm pump 300 according to the Embodiment 2 described above as the replenishment pump 813 for pumping (distributing) the UV ink in the ink replenishment unit 81 that connects between the sub-tank 821 and the ink cartridge mounted on the cartridge mounting part 811 in the ink supply flow path. In other words, as the replenishment pump 813, the diaphragm pump 300 including the duckbill valve 100 (the first duckbill valve 110 and the second duckbill valve 120) according to Embodiment 1 is used.

For the replenishment pump 813 of the ink replenishment unit 81, the highly reliable diaphragm pump 300 that includes the highly reliable duckbill valve 100 and can stably pump fluid is used. Thus, UV ink can be stably supplied to the ink discharge head 361 and the printing apparatus 1000 that can stably perform high-quality printing can be provided.

The disclosure is not limited to Embodiments, and may be appropriately modified within the concept or the gist of the disclosure which can be derived from the claims and the specification, and therefore, various modifications of Embodiments may be conceivable. Modifications will be described below.

Modification 1

In Embodiment 1, the main body part 46 has a circular shape as viewed from the Z direction side, but this is not limitative. The main body part 46 may has an oval shape or a polygonal shape as viewed from the Z direction side.

Modification 2

In the embodiment, the material of the duckbill valve 100 is an elastic member (silicon rubber) whose main component is silicon, but this is not limitative.

For example, the material of the duckbill valve 100 may be an elastic member containing fluorine. For example, the material of the duckbill valve 100 may be a perfluorinated resin.

Modification 3

In Embodiment 2, the duckbill valve 100 according to Embodiment 1 is used for both the first duckbill valve 110 and the second duckbill valve 120 of the diaphragm pump 300, but this is not limitative. For example, in the pumping of the fluid, the duckbill valve 100 may be used only for the second duckbill valve 120 where a higher fluid pressure is generated than the first duckbill valve 110 on the inlet flow path 74 side.

In other words, it suffices that the duckbill valve 100 according to the embodiment is used for at least one of the first duckbill valve 110 and the second duckbill valve 120.

Modification 4

In Embodiment 3, the ink used in the printing apparatus 1000 is UV ink, but this is not limitative. Examples of the ink used in the printing apparatus 1000 may include a water-based ink, an oil-based ink, a solvent ink, and a sublimation ink.

Reference Signs List

40 ... First flow path formation part, 41 ... First flow path, 42 ... Second flow path, 43 ... Flow path, 45 ... Flange part, 46 ... Main body part, 50 ... Second flow path formation part, 51 ... Main body part, 51a ... Base end, 52 ... First wall part, 52a, 53a ... Outer circumferential surface, 52 b, 53 b ... Virtual surface, 53 ... Second wall part, 54 ... Peripheral part, 57 ... Tip end part, 58 ... Slit, 100 ... Duckbill valve

**Claims**

1. A duckbill valve comprising:

   a first flow path formation part including a first flow path for fluid; and

a second flow path formation part having a base end side supported by the first flow path formation part, and including, between a first wall part and a second wall part, a second flow path for the fluid, the second flow path having a width that increases gradually toward the first flow path formation part, wherein

the second flow path formation part has a slit formed at a tip end part on an opposite side from the base end side, and the second flow path communicates with outside when the slit is opened, and, communication between the second flow path and the outside is blocked when the slit is closed,

a value of ratio obtained by dividing an inner diameter of the first flow path formation part by an outer diameter of the first flow path formation part is smaller than 0.65,

an angle between the first wall part and the second wall part is within a range from 50 degrees to 65 degrees, and

when a pressure difference of the second flow path with respect to a pressure of the outside is -75kPa, which is a negative pressure, the first wall part and the second wall part do not make contact with each other.

2. The duckbill valve according to claim 1, wherein when the pressure difference of the second flow path with respect to the pressure of the outside is -90kPa, which is a negative pressure, the first wall and the second wall do not make contact with each other.

3. The duckbill valve according to claim 1 or 2, wherein the first flow path formation part and the second flow path formation part are formed of an elastic member including, as a main component, silicon.

4. A diaphragm pump comprising the duckbill valve according to any one of claims 1 to 3.

5. A printing apparatus comprising the diaphragm pump according to claim 4.

6. The printing apparatus according to claim 5, wherein UV ink is supplied by the diaphragm pump.

7. A duckbill valve comprising:

a first flow path formation part including a first flow path for fluid; and

a second flow path formation part having a base end side supported by the first flow path formation part, and including, between a first wall part and a second wall part, a second flow path for the fluid, the second flow path having a width that increases gradually toward the first flow path formation part, wherein

the second flow path formation part has a slit formed at a tip end part on an opposite side from the base end side, and the second flow path communicates with outside when the slit is opened, and, communication between the second flow path and the outside is blocked when the slit is closed, and

when L2 is an inner diameter of the first flow path formation part, L1 is an outer diameter of the first flow path formation part, L2/L1 is a value of ratio obtained by dividing the inner diameter of the first flow path formation part by the outer diameter of the first flow path formation part, and θ is an angle between the first wall part and the second wall part,

the first wall part and the second wall part do not make contact with each other under a condition (1) where L2/L1 is 0.65 and θ is from 57 to 70 degrees, a condition (2) where L2/L1 is equal to or greater than 0.51 and is smaller than 0.65, and, θ is from 50 degrees to 70 degrees, or a condition (3) where L2/L1 is equal to or greater than 0.36 and is smaller than 0.51, and, θ is from 38 degrees to 70 degrees, and, in addition, when a pressure difference of the second flow path with respect to a pressure of the outside is -75kPa, which is a negative pressure.

8. A duckbill valve comprising:

a first flow path formation part including a first flow path for fluid; and

a second flow path formation part having a base end side supported by the first flow path formation part, and including, between a first wall part and a second wall part, a second flow path for the fluid, the second flow path having a width that increases gradually toward the first flow path formation part, wherein

the second flow path formation part has a slit formed at a tip end part on an opposite side from the base end side, and the second flow path communicates with outside when the slit is opened, and, communication between the second flow path and the outside is blocked when the slit is closed, and

when L2 is an inner diameter of the first flow path formation part, L1 is an outer diameter of the first flow path formation part, L2/L1 is a value of ratio obtained by dividing the inner diameter of the first flow path formation part by the outer diameter of the first flow path formation part, and θ is an angle between the first wall part and the second wall part,

the first wall part and the second wall part do not make contact with each other under a condition (1) where L2/L1 is 0.65 and θ is from 65 to 70 degrees, a condition (2) where L2/L1 is equal to or greater than 0.51 and is smaller than 0.65, and, θ is from 50 degrees to 70 degrees, a condition (3) where L2/L1 is equal to or greater than 0.44 and is smaller than 0.51, and, θ is from 46 degrees to 70 degrees, or a condition (4) where L2/L1 is equal to or greater than 0.36 and is smaller than 0.44, and, θ is from 38 degrees to 70 degrees, and, in addition, when a pressure difference of the second flow path with respect to a pressure of the outside is -90kPa, which is a negative pressure.

FIG. 1

FIG. 2

100

57

54(54a)

52(52a)

51a

46
40
45

Z

Y⊗ →X

FIG. 3

FIG. 4

FIG. 5

FIG. 6

FIG. 7

FIG. 8

| | CONDITION OF DUCKBILL VALVE | | | | | PERFORMANCE OF DUCKBILL VALVE | | | | | | | | |
|---|---|---|---|---|---|---|---|---|---|---|---|---|---|---|
| | RUBBER HARDNESS | L1 | L2 | L2/L1 | θ | ΔP | | | | | | | | DURABILITY TIME (ΔP = -90kPa) |
| | | | | | | - 20kPa | - 30kPa | - 40kPa | - 50kPa | - 60kPa | - 60kPa | - 80kPa | - 90kPa | |
| RELATED-ART CONDITION | 50 deg. | 5.5mm | 3.6mm | 0.65 | 38 deg. | EXCELLENT | FINE | MARGINAL | POOR | POOR | POOR | POOR | POOR | 20 min. |
| NEW CONDITION 1 | 50 deg. | 5.5mm | 2.8mm | 0.51 | 57 deg. | | | | | | | | FINE | 500 hr. OR LONGER |
| NEW CONDITION 2 | 60 deg. | 5.5mm | 2.8mm | 0.51 | 38 deg. | | | | | | | | MARGINAL | 300 hr. |
| NEW CONDITION 3 | 60 deg. | 5.5mm | 2.6mm | 0.47 | 38 deg. | | | | | | | | MARGINAL | 300 hr. |
| NEW CONDITION 4 | 60 deg. | 5.5mm | 2.1mm | 0.44 | 38 deg. | | | | | | | | MARGINAL | 300 hr. |

FIG. 9

EP 3 726 109 A1

FIG. 10

ΔP = -75kPa    RUBBER HARDNESS = 50deg.

| CONDITION OF DUCKBILL VALVE | | | | | | | | |
|---|---|---|---|---|---|---|---|---|
| L1 | L2 | L2 / L1 | CROSSING ANGLE θ | | | | | |
| | | | 38deg. | 46deg. | 50deg. | 57deg. | 65deg. | 70deg. |
| 5.5mm | 3.6mm | 0.65 | ×<br>D=1.509 | ×<br>D=0.965 | ×<br>D=0.551 | △<br>D=0.253 | △<br>D=0.214 | △<br>D=0.205 |
| 5.5mm | 3.2mm | 0.58 | ×<br>D=0.865 | ×<br>D=0.397 | △<br>D=0.224 | ○<br>D=0.192 | ○<br>D=0.189 | ○<br>D=0.187 |
| 5.5mm | 2.8mm | 0.51 | ×<br>D=0.494 | ×<br>D=0.354 | △<br>D=0.217 | ○<br>D=0.189 | ○<br>D=0.183 | ○<br>D=0.189 |
| 5.5mm | 2.4mm | 0.44 | △<br>D=0.294 | △<br>D=0.249 | ○<br>D=0.186 | ○<br>D=0.182 | ○ | ○ |
| 5.6mm | 2.0mm | 0.36 | △<br>D=0.225 | ○<br>D=0.198 | ○<br>D=0.186 | ○ | ○ | ○ |

# FIG. 11

EP 3 726 109 A1

ΔP = -90kPa    RUBBER HARDNESS = 50deg.

| L1 | L2 | L2 / L1 | CROSSING ANGLE θ | | | | | |
|---|---|---|---|---|---|---|---|---|
| | | | 38deg. | 46deg. | 50deg. | 57deg. | 65deg. | 70deg. |
| 5.5mm | 3.6mm | 0.65 | ✕ D=1.813 | ✕ D=1.048 | ✕ D=0.662 | ✕ D=0.348 | △ D=0.278 | △ D=0.242 |
| 5.5mm | 3.2mm | 0.58 | ✕ D=1.027 | ✕ D=0.576 | △ D=0.283 | △ D=0.220 | △ D=0.222 | ○ D=0.195 |
| 5.5mm | 2.8mm | 0.51 | ✕ D=0.604 | ✕ D=0.427 | △ D=0.247 | ○ D=0.198 | ○ D=0.190 | ○ D=0.197 |
| 5.5mm | 2.4mm | 0.44 | ✕ D=0.366 | △ D=0.283 | △ D=0.214 | ○ D=0.186 | ○ | ○ |
| 5.6mm | 2.0mm | 0.36 | △ D=0.239 | △ D=0.210 | ○ D=0.186 | ○ | ○ | ○ |

CONDITION OF DUCKBILL VALVE

# FIG. 12

FIG. 13

FIG. 14

**FIG. 15**

FIG. 16

# FIG. 17

FIG. 18

FIG. 19

FIG. 20

**INTERNATIONAL SEARCH REPORT**

| International application No. |
| --- |
| PCT/JP2018/045049 |

**A. CLASSIFICATION OF SUBJECT MATTER**
Int.Cl.  F16K15/14(2006.01)i, B41J2/175(2006.01)i, F04B43/02(2006.01)i,
F04B53/10(2006.01)i

According to International Patent Classification (IPC) or to both national classification and IPC

**B. FIELDS SEARCHED**

Minimum documentation searched (classification system followed by classification symbols)
Int.Cl. F16K15/14, B41J2/175, F04B43/02, F04B53/10

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 3017674 U (NIPPON HUME PIPE CO., LTD.) 31 October 1995, fig. 1 (Family: none) | 1–8 |
| Y | JP 3-4077 A (NISSHO CO., LTD.) 10 January 1991, specification, page 2, upper left column, lines 15–16 (Family: none) | 1–8 |
| Y | JP 2001-248560 A (FUJIKURA RUBBER LTD.) 14 September 2001, fig. 1 (Family: none) | 4–6 |
| Y | JP 2012-210824 A (MIMAKI ENGINEERING CO., LTD.) 01 November 2012, paragraph [0065] & US 2010/0295905 A1, paragraph [0053] & WO 2009/128506 A1 & EP 2281688 A1 & CN 101925466 A | 5–6 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 January 2019 (30.01.2019) | 12 February 2019 (12.02.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001248560 A